(19) **Europäisches Patentamt**
**European Patent Office**
**Office européen des brevets**

(11) **EP 2 792 576 A1**

(12) **EUROPEAN PATENT APPLICATION**
published in accordance with Art. 153(4) EPC

(43) Date of publication:
**22.10.2014 Bulletin 2014/43**

(21) Application number: **11877109.6**

(22) Date of filing: **09.12.2011**

(51) Int Cl.:
**B62D 6/00** *(2006.01)*      **B62D 5/04** *(2006.01)*
**B62D 101/00** *(2006.01)*      **B62D 111/00** *(2006.01)*
**B62D 119/00** *(2006.01)*

(86) International application number:
**PCT/JP2011/078529**

(87) International publication number:
**WO 2013/084348 (13.06.2013 Gazette 2013/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Toyota Jidosha Kabushiki Kaisha
Toyota-shi, Aichi 471-8571 (JP)**

(72) Inventor: **AOKI Kenichiro
Toyota-shi
Aichi 471-8571 (JP)**

(74) Representative: **Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)**

(54) **ELECTRIC POWER STEERING DEVICE**

(57)      When a steering torque sensor fails, a time delay setting section 90 calculates delayed lateral acceleration LAlim by delaying lateral acceleration LA. A lateral acceleration upper limit restricting section 82 calculates restricted lateral acceleration LA2 by restricting the upper limit of the lateral acceleration LA by the delayed lateral acceleration LAlim. An assist torque calculation section 83 calculates a target assist torque Ta2 on the basis of the restricted lateral acceleration LA2 such that the target assist torque Ta2 increases with the restricted lateral acceleration LA2. Thus, it is possible to properly delay steering assist in relation to detection of the lateral acceleration LA, whereby slippage of a vehicle due to excessive turning of a steering wheel 11 is suppressed.

EP 2 792 576 A1

## Description

TECHNICAL FIELD

The present invention relates to an electric power steering apparatus which drives a motor in accordance with steering operation performed by a driver, to thereby generate steering assist torque.

BACKGROUND ART

Conventionally, an electric power steering apparatus detects the steering torque applied to a steering wheel by a driver through use of a torque sensor, and calculates a target assist torque on the basis of the detected steering torque. Then, by means of controlling the current to be supplied to a motor so as to obtain the target assist torque, the electric power steering apparatus assists the steering operation performed by the driver. Such control of power supply to the motor is called assist control.

In the case where the torque sensor has suffered a failure, the target assist torque cannot be calculated, and consequently assist control cannot be performed. To solve this problem, Patent Document 1 proposes an electric power steering apparatus which can perform steering assist even in the case where the torque sensor fails. When a failure of the torque sensor is detected, the electric power steering apparatus proposed in Patent Document 1 measures lateral acceleration and controls the power supply to the motor on the basis of the measured lateral acceleration. This electric power steering apparatus has a map defining the relation between lateral acceleration and motor drive current. By referring to this map, the electric power steering apparatus supplies to the motor a drive current set in accordance with the lateral acceleration. In this case, the drive current is set such that it increases in proportion to the lateral acceleration.

PRIOR ART DOCUMENT

PATENT DOCUMENT

Patent Document 1: Japanese Patent Application Laid-Open (*kokai*) No. 2006-248250

SUMMARY OF THE INVENTION

However, in the case where merely a drive current proportional to lateral acceleration is set as described above, steering assist is started immediately after the lateral acceleration is detected. Therefore, particularly in the case where a driver quickly turns the steering wheel of a vehicle which is traveling on a road whose surface is low in coefficient of friction, the driver may turn the steering wheel excessively, whereby the vehicle may sideslip (slip). This is because when the driver turns the steering wheel excessively, the lateral acceleration increases further, and consequently, assist torque increases and becomes excessively large, which promotes the excessive turning of the steering wheel.

An object of the present invention is to cope with the above-described problem, and to generate assist torque more properly in the case where assist control is performed on the basis of lateral acceleration.

The present invention, which achieves the above-described object, is characterized by comprising a motor (20) which is provided in a steering mechanism and generates steering assist torque; lateral acceleration obtaining means (27) for obtaining lateral acceleration (LA) of a vehicle; delayed lateral acceleration setting means (90) for setting delayed lateral acceleration (LAlim) by delaying the lateral acceleration obtained by the lateral acceleration obtaining means; restricted lateral acceleration setting means (82) for setting restricted lateral acceleration (LA2) by restricting the lateral acceleration, which is obtained by the lateral acceleration obtaining means, by using as an upper limit the delayed lateral acceleration set by the delayed lateral acceleration setting means; assist control quantity setting means (83) for setting a target steering assist control quantity (Ta2) on the basis of the restricted lateral acceleration set by the restricted lateral acceleration setting means; and motor control means (60) for driving and controlling the motor in accordance with the target steering assist control quantity.

In the present invention, when the lateral acceleration obtaining means obtains the lateral acceleration (information representing the lateral acceleration) of the vehicle, the delayed lateral acceleration setting means sets delayed lateral acceleration by delaying the lateral acceleration. The delayed lateral acceleration is produced such that the delayed lateral acceleration follows, with delay, the transition (change with time) of the lateral acceleration. The delayed lateral acceleration is set by, for example, computation processing performed by a microcomputer.

The restricted lateral acceleration setting means sets restricted lateral acceleration by restricting the lateral acceleration by using the delayed lateral acceleration as an upper limit. Namely, the restricted lateral acceleration setting means sets the restricted lateral acceleration by restricting the upper limit of the lateral acceleration by the delayed lateral acceleration. For example, the restricted lateral acceleration setting means compares the lateral acceleration and the delayed lateral acceleration and selects the smaller one as the restricted lateral acceleration.

Since the delayed lateral acceleration is obtained by delaying the lateral acceleration, at the start of generation of the lateral acceleration, the delayed lateral acceleration assumes a value smaller than the lateral acceleration. Therefore, the restricted lateral acceleration, which is obtained by restricting the upper limit of the lateral acceleration by the delayed lateral acceleration, assumes the same value as the delayed lateral acceleration. During a period in which the lateral acceleration is increasing, the delayed lateral acceleration increases to follow the lateral acceleration with delay. When the increasing lateral acceleration starts to decrease, the delayed lateral acceleration starts to decrease with delay from that point in time. As a result, the magnitude relation between the lateral acceleration and the delayed lateral acceleration reverses in the middle, and the restricted lateral acceleration is switched from the delayed lateral acceleration to the lateral acceleration.

The assist control quantity setting means sets a target steering assist control quantity on the basis of the restricted lateral acceleration. In this case, preferably, the assist control quantity setting means sets the target steering assist control quantity such that the target steering assist control quantity increases with the restricted lateral acceleration. The motor control means drives and controls the motor in accordance with the target steering assist control quantity. Accordingly, at the start of generation of the lateral acceleration, since the restricted lateral acceleration assumes a small value, the target steering assist control quantity can be made small.

Thus, according to the present invention, at the start of generation of the lateral acceleration, the force required to turn the steering wheel increases, whereby fast steering wheel operation can be restrained. Therefore, slip (sideslip) of the vehicle due to excessive turning of the steering wheel can be suppressed.

Another feature of the present invention is provision of delayed lateral acceleration restricting means (94, 95) for setting at least one of an upper limit (LAlim_max) and a lower limit (LAlim_min) of the delayed lateral acceleration.

In the present invention, the delayed lateral acceleration restricting means sets at least one of the upper and lower limits of the delayed lateral acceleration. Namely, the delayed lateral acceleration restricting means restricts the delayed lateral acceleration set by the delayed lateral acceleration setting means such that the delayed lateral acceleration does not become greater than the upper limit or does not become less than the lower limit. In the case where the delayed lateral acceleration is restricted by an upper limit, the restricted lateral acceleration also assumes a value which does not exceed the upper limit of the delayed lateral acceleration. Thus, the upper limit of the target steering assist control quantity can be restricted. Accordingly, it is possible to prevent the steering assist from becoming excessive.

Meanwhile, in the case where the delayed lateral acceleration is restricted by a lower limit, the delayed lateral acceleration does not assume a value less than the lower limit. Therefore, in a situation where a small lateral acceleration less than the lower limit is generated, the restricted lateral acceleration can be set to become equal to the lateral acceleration. Namely, in the case where no lower limit is provided for the delayed lateral acceleration, immediately after generation of a lateral acceleration, the restricted lateral acceleration always becomes zero. However, by providing a lower limit for the delayed lateral acceleration, the restricted lateral acceleration can be set to a value greater than zero immediately after generation of a lateral acceleration. Thus, steering assist can be started without any delay in relation to the lateral acceleration. In this case, in a situation where a large lateral acceleration is generated, steering assist is restrained by restricting the restricted lateral acceleration by the delayed lateral acceleration, whereby slippage of the vehicle can be suppressed. Accordingly, steering assist can be started without delay in the case where the lateral acceleration is so small that the vehicle does not slip. As a result, it is possible to simultaneously achieve suppression of slippage of the vehicle and improvement of steering performance.

Another feature of the present invention resides in that the delayed lateral acceleration restricting means (94, 95) sets the at least one of the upper and lower limits of the delayed lateral acceleration to assume a smaller value when the speed (vx) of the vehicle is high as compared with the case where the speed of the vehicle is low.

So long as the vehicle is a normal operation state, large lateral acceleration is rarely generated when the vehicle speed is high. In view of this, in the present invention, when the vehicle speed is high, the at least one of the upper and lower limits of the delayed lateral acceleration is set to a smaller value as compared with the case where the vehicle speed is low. Thus, in actual use, slippage of the vehicle can be suppressed effectively.

Another feature of the present invention resides in provision of time delay setting means (923) for setting the time delay of the delayed lateral acceleration in relation to the lateral acceleration such that when the delayed lateral acceleration decreases, the time delay becomes greater as compared with the case where the delayed lateral acceleration increases.

In the present invention, the time delay setting means sets the time delay of the delayed lateral acceleration in relation to the lateral acceleration such that when the delayed lateral acceleration decreases, the time delay becomes greater as compared with the case where the delayed lateral acceleration increases. Accordingly, in the case where the driver alternately and repeatedly turns the steering wheel clockwise and counterclockwise, at the time of the second and subsequent steering operations, there can be secured periods during which the delayed lateral acceleration assumes a value greater than the lateral acceleration, whereby steering assist can be started without delay. Therefore, the driver can cause the vehicle to travel along a road having a series of curves through nimble steering wheel operation.

Another feature of the present invention resides in provision of slip index obtaining means (98) for obtaining a slip index which represents an index of sideslip of the vehicle; and delayed lateral acceleration reduction means (97, 98) for reducing the delayed lateral acceleration when the slip index exceeds a threshold value.

In the present invention, the slip index obtaining means obtains a slip index which represents the index of sideslip of the vehicle, and the delayed lateral acceleration reduction means reduces the delayed lateral acceleration when the slip index exceeds the threshold value. If the vehicle slips, the delayed lateral acceleration is reduced. As a result, the restricted lateral acceleration decreases, and the steering assist decreases. Therefore, according to the present invention, if the vehicle slips, the force required to turn the steering wheel can be increased. As a result, escalation of slippage of the vehicle (i.e., further slippage of the vehicle) can be prevented.

Another feature of the present invention resides in provision of delayed lateral acceleration lower limit restricting means (954) for setting a lower limit of the delayed lateral acceleration; and delayed lateral acceleration lower limit changing means (S13) for changing the lower limit of the delayed lateral acceleration to zero when the slip index exceeds a threshold value.

In the present invention, when the slip index exceeds the threshold value, the delayed lateral acceleration lower limit changing means changes the lower limit of the delayed lateral acceleration to zero. Accordingly, the delayed lateral acceleration reduction means can reduce the delayed lateral acceleration to zero. As a result, steering assist can be stopped by decreasing the restricted lateral acceleration to zero. Therefore, according to the present invention, if the vehicle slips, steering assist can be stopped without fail, whereby escalation of slippage of the vehicle can be prevented.

Another feature of the present invention resides in provision of steering torque sensor (21) which detects steering torque which is transmitted from a steering wheel to a steering shaft; and anomaly detection means (72) for detecting an anomaly of the steering torque sensor, wherein the assist control quantity setting means (70) sets the target steering assist control quantity on the basis of the steering torque detected by the steering torque sensor in the case where the anomaly of the steering torque sensor is not detected (71) and sets the target steering assist control quantity on the basis of the restricted lateral acceleration in the case where the anomaly of the steering torque sensor is detected (80).

According to the present invention, the target steering assist control quantity is set on the basis of the steering torque detected by the steering torque sensor in the case where no anomaly is detected in the steering torque sensor, and the target steering assist control quantity is set on the basis of the restricted lateral acceleration in the case where an anomaly of the steering torque sensor is detected. Accordingly, even when the steering torque sensor fails, proper steering assist which does not cause excessive turning of the steering wheel can be obtained.

Notably, in the above description, in order to facilitate understanding of the invention, the constituent elements of the invention corresponding to those of embodiments are denoted by symbols which are used in the embodiments and are parenthesized; however, the constituent elements of the invention are not limited to those in the embodiments denoted by the symbols.

BRIEF DESCRIPTION OF THE DRAWINGS

FIG. 1 is a schematic diagram of an electric power steering apparatus according to an embodiment of the present invention.
FIG. 2 is a functional block diagram of an assist ECU.
FIG. 3 is a graph showing a normal-time assist map.
FIG. 4 is a functional block diagram of an abnormal-time assist torque calculation section.
FIG. 5 is a functional block diagram of a time delay setting section.
FIG. 6 is a graph showing changes in lateral acceleration, delayed lateral acceleration, and restricted lateral acceleration.
FIG. 7 is a set of graphs each showing an abnormal-time assist map.
FIG. 8 is a functional block diagram of a time delay setting section according to a second embodiment.
FIG. 9 is a pair of graphs which show a delayed lateral acceleration upper limit map and a delayed lateral acceleration lower limit map according to the second embodiment.
FIG. 10 is a functional block diagram of an integral calculation section according to the second embodiment.
FIG. 11 is a graph relating to the second embodiment and showing changes in lateral acceleration, delayed lateral acceleration, and restricted lateral acceleration.
FIG. 12 is a pair of graphs relating to a third embodiment and showing the characteristic of delay adjustment gain.
FIG. 13 is a graph relating to the third embodiment and showing changes in lateral acceleration, delayed lateral acceleration, and restricted lateral acceleration.
FIG. 14 is a functional block diagram of a time delay setting section according to a fourth embodiment.
FIG. 15 is a graph relating to the fourth embodiment and showing a reduction amount map.
FIG. 16 is a flowchart showing a delayed lateral acceleration lower limit setting routine according to the fourth embodiment.
FIG. 17 is a graph relating to the fourth embodiment and showing changes in lateral acceleration, delayed lateral acceleration, and restricted lateral acceleration.
FIG. 18 is a flowchart showing a gain multiplying routine according to a modification of the fourth embodiment.
FIG. 19 is a graph showing an abnormal-time assist map according to a first modification.

FIG. 20 is a graph showing another abnormal-time assist map according to the first modification.

FIG. 21 is a functional block diagram of an assist torque calculation section according to a second modification.

FIG. 22 is a graph showing a compensation torque map according to the second modification.

FIG. 23 is a graph showing another compensation torque map according to the second modification.

MODE FOR CARRYING OUT THE INVENTION

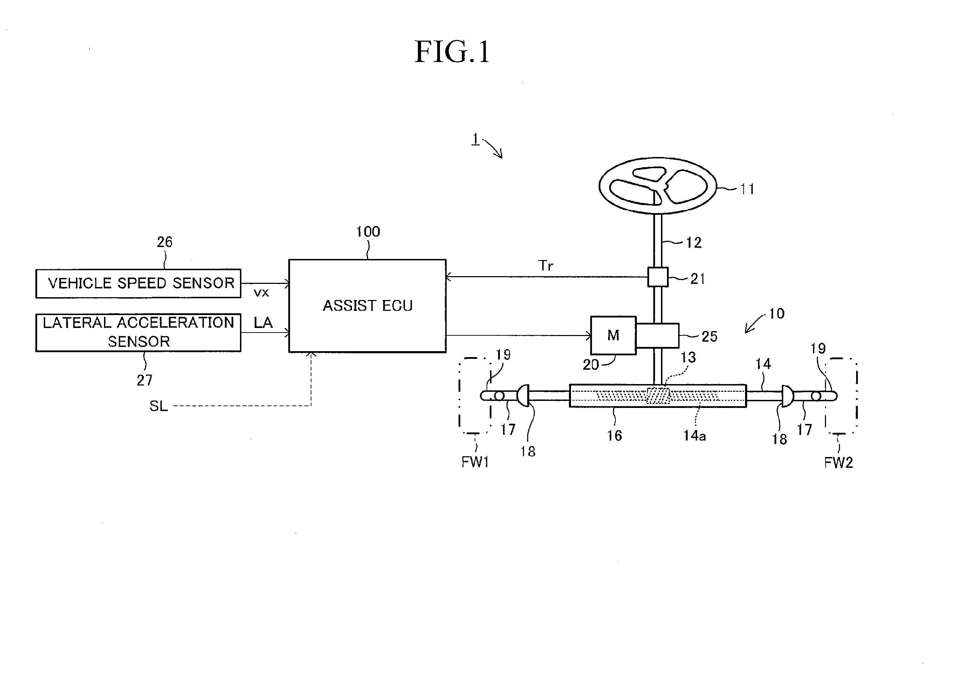

Hereinafter, an electric power steering apparatus according to an embodiment of the present invention will be described with reference to the drawings. FIG. 1 schematically shows the configuration of the electrical power steering apparatus 1 according to the embodiment.

The power steering apparatus 1 includes, as main components, a steering mechanism 10 which steers steerable wheels in accordance with steering operation applied to a steering wheel 11; a motor 20 which is mounted in the steering mechanism 10 so as to generate steering assist torque; and an electronic control unit 100 which controls operation of the motor 20 in accordance with the operation state of the steering wheel 11. Hereinafter, the electronic control unit 100 will be referred to as the assist ECU 100.

The steering mechanism 10, which steers left and right front wheels FW1 and FW2 in accordance with turning operation applied to the steering wheel 11, includes a steering shaft 12 whose upper end is connected to the steering wheel 11 for unitary rotation therewith. A pinion gear 13 is connected to the lower end of the steering shaft 12 for unitary rotation therewith. The pinion gear 13 is in meshing engagement with a gear section 14a formed on a rack bar 14, thereby constituting a rack-and-pinion mechanism in cooperation with the rack bar 14.

The gear section 14a of the rack bar 14 is accommodated in a rack housing 16, and the left and right ends of the rack bar 14, which project from the rack housing 16, are connected to left and right tie rods 17, respectively. Stoppers 18 which determine the stroke ends of the rack bar 14 are formed at the connection portions between the rack bar 14 and the tie rods 17. The stoppers 18 abut against opposite end portions of the rack housing 16, thereby mechanically restricting the stroke of motion of the rack bar 14 in the left-right direction. The other ends of the left and right tie rods 17 are connected to knuckles 19 provided on the left and right front wheels FW1 and FW2. By virtue of the above-described configuration, the left and right front wheels FW1 and FW2 are steered leftward or rightward in accordance with an axial displacement of the rack bar 14, which results from rotation of the steering shaft 12 about its axis.

The motor 20 is assembled to the steering shaft 12 via a reduction gear 25. The motor 20 rotates the steering shaft 12 about its axis via the reduction gear 25, to thereby apply assist force for the turning operation applied to the steering wheel 11.

A steering torque sensor 21 is provided on the steering shaft 12 at a location between the steering wheel 11 and the reduction gear 25. The steering torque sensor 21 detects, for example, the torsion angle of a torsion bar (unillustrated) provided in the middle of the steering shaft 12 through use of a resolver, etc., and detects the steering torque Tr applied to the sheeting shaft 12 from the detected torsion angle. The steering torque Tr represents the direction in which the steering wheel 11 is turned by its polarity (positive or negative). For example the steering torque Tr assumes a positive value, when the steering wheel 11 is turned clockwise and assumes a negative value when the steering wheel 11 is turned counterclockwise. Notably, in the present embodiment, the torsion angle of the torsion bar is detected by the resolver; however, it may be detected by other types of rotational angle sensors such as an MR sensor.

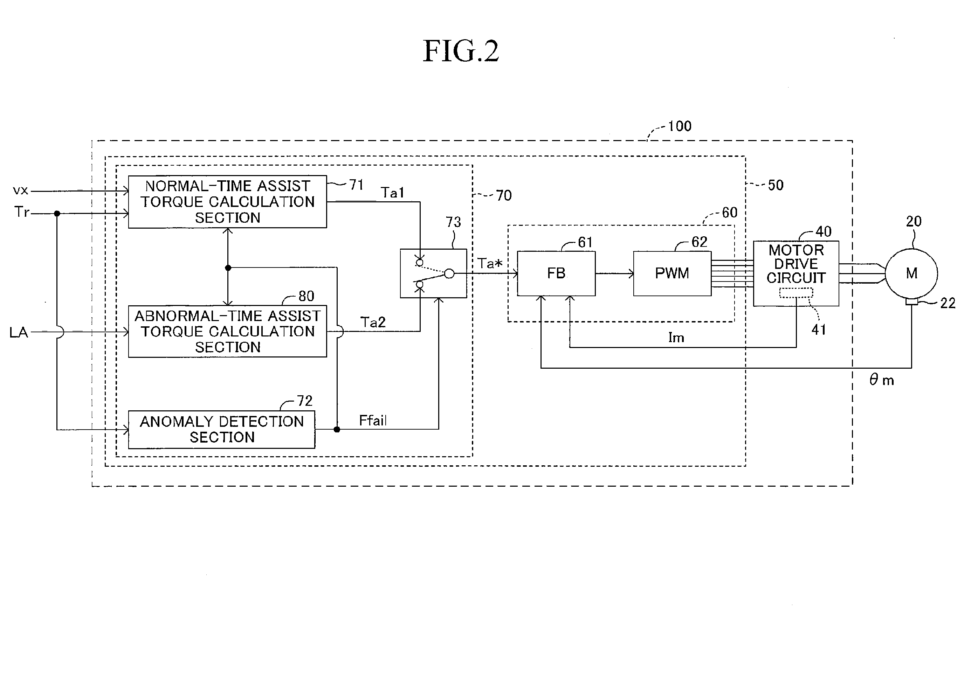

Next, the assist ECU 100 will be described with reference to FIG. 2. The assist ECU 100 includes an electric control circuit 50 which computes a target control quantity of the motor 20 and outputs a switch drive signal in accordance with the computed target control quantity; and a motor drive circuit 40 which supplies power to the motor 20 in accordance with a switch drive signal output from the electric control circuit 50.

Various types of motors can be used as the motor 20. For example, in the case where a brushless DC motor is used, a three-phase inverter may be used as the motor drive circuit 40. In the case where a brushed motor is used, an H-bridge circuit may be used as the motor drive circuit 40. In the present embodiment, descriptions are provided on the assumption that the brushless DC motor is used.

The electric control circuit 50 includes a microcomputer composed of a CPU, a ROM, a RAM, etc.; various input/output interfaces; a switch drive circuit which supplies a switch drive signal to the motor drive circuit 40; and others.

The electric control circuit 50 includes two functional blocks; i.e., a target assist torque calculation section 70 which calculates a target assist torque Ta* and a motor control section 60 which calculates the amount of power supplied to the motor (hereinafter referred to as the "motor power supply amount") such that the current corresponding to the target assist torque Ta* flows through the motor 20, and outputs to the motor drive circuit 40 a switch drive signal corresponding to the calculated motor power supply amount. The processing in each functional block is performed by repeatedly executing a control program stored in the microcomputer at the predetermined intervals.

The target assist torque calculation section 70 includes a normal-time assist torque calculation section 71, an abnormal-time assist torque calculation section 80, an anomaly detection section 72, and a control changeover section 73. The normal-time assist torque calculation section 71 receives an anomaly determination flag Ffail from the anomaly detection section 72. The normal-time assist torque calculation section 71 calculates a target assist torque Ta1 in the case where the anomaly determination flag Ffail is "0," and stops the calculation in the case where the anomaly determination flag Ffail is "1." The abnormal-time assist torque calculation section 80 receives the anomaly determination flag Ffail from the anomaly detection section 72. The abnormal-time assist torque calculation section 80 calculates a target assist torque Ta2 in the case where the anomaly determination flag Ffail is "1," and stops the calculation in the case where the anomaly determination flag Ffail is "0."

The anomaly detection section 72 determines whether or not an anomaly has occurred in the steering torque sensor 21. In the case where the anomaly detection section 72 determines that no anomaly has occurred in the steering torque sensor 21, it sets the anomaly determination flag Ffail to "0." In the case where the anomaly detection section 72 determines that an anomaly has occurred in the steering torque sensor 21, it sets the anomaly determination flag Ffail to "1." The anomaly detection section 72 outputs the anomaly determination flag Ffail to the normal-time assist torque calculation section 71, the abnormal-time assist torque calculation section 80, and the control changeover section 73.

The control changeover section 73 receives the target assist torque Ta1 calculated by the normal-time assist torque calculation section 71 and the target assist torque Ta2 calculated by the abnormal-time assist torque calculation section 80. The control changeover section 73 selects the target assist torque Ta1 in the case where the anomaly determination flag Ffail is "0," and selects the target assist torque Ta2 in the case where the anomaly determination flag Ffail is "1." The control changeover section 73 outputs the selected target assist torque Ta1 (or Ta2) to the motor control section 60 as the target assist torque Ta*.

The functional blocks of the target assist torque calculation section 70 will be described in detail later.

The motor control section 60 includes a current feedback control section 61 and a PWM signal generation section 62. The current feedback control section 61 receives the target assist torque Ta* output from the control changeover section 73, and divides the target assist torque Ta* by a torque constant of the motor 20 so as to calculate a target current I* which is required to generate the target assist torque Ta*. In addition, the current feedback control section 61 receives a motor current Im (referred to as an actual current Im) detected by a current sensor 41 provided in the motor drive circuit 40, calculates the deviation of the actual current Im from the target current I*, and calculates a target voltage V*, through proportional integral control performed by using the calculated deviation, such that the actual current Im follows the target current I*. Subsequently, the current feedback control section 61 outputs a PWM control signal (switch drive signal) corresponding to the target voltage V* to the switching element of the motor drive circuit (inverter) 40. Thus, the motor 20 is driven, whereby assist torque following the target assist torque Ta* is applied to the steering mechanism 10.

Notably, since a brushless DC motor is used in the present embodiment, the current feedback control section 61 receives a motor rotational angle θm detected by a motor rotational angle sensor 22 provided in the motor 20, and converts the received motor rotational angle θm to an electrical angle, to thereby control the phase of the target current on the basis of the electrical angle.

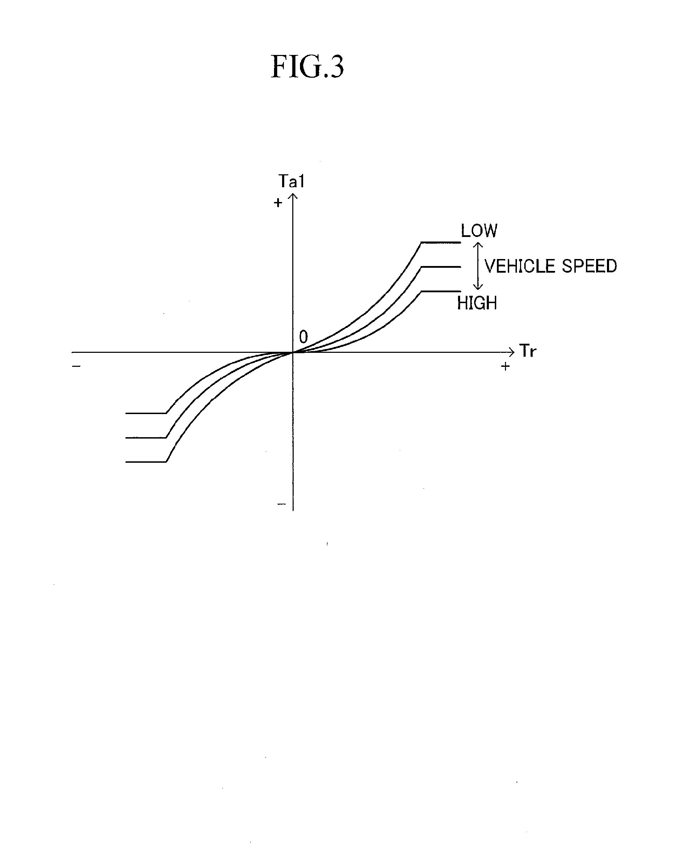

Next, there will be described in detail the functional blocks of the target assist torque calculation section 70. The normal-time assist torque calculation section 71 receives a vehicle speed vx detected by a vehicle speed sensor 26 and the steering torque Tr detected by the steering torque sensor 21, and calculates the target assist torque Ta1 with reference to a normal-time assist map shown in FIG. 3. The normal-time assist map, which is stored in the normal-time assist torque calculation section 71, is relational data which defines the relation between the steering torque Tr and the target assist torque Ta1 for each of a plurality of representative vehicle speeds vx. The normal-time assist map has a characteristic that the target assist torque Ta1 increases with the magnitude (absolute value) of the steering torque Tr and decreases as the vehicle speed vx increases.

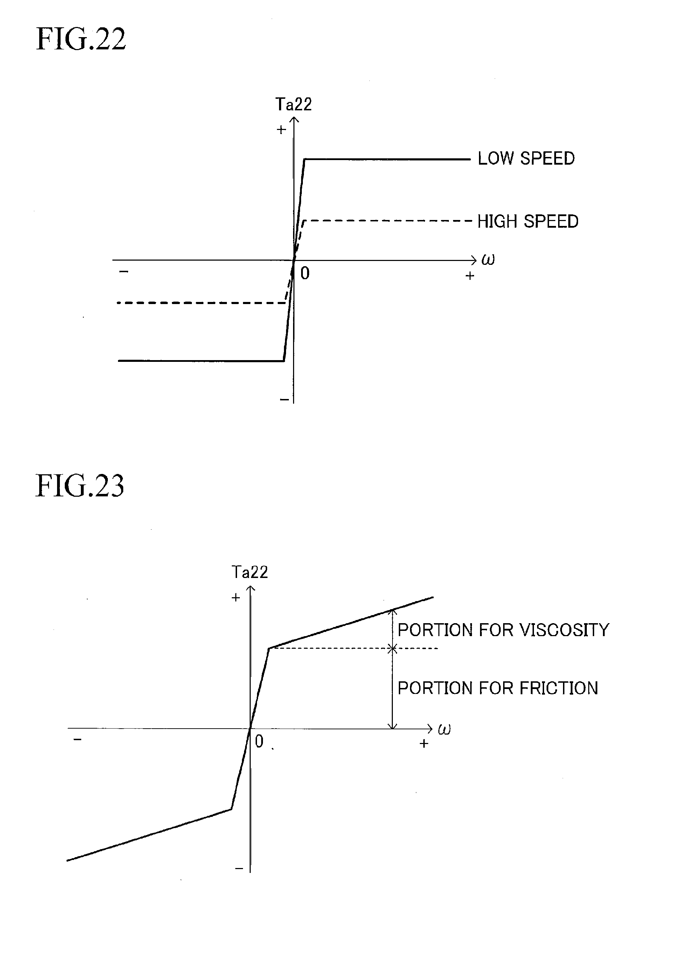

Notably, when the target assist torque Ta1 is calculated, various kinds of compensation torques may be added to the target assist torque Ta1. For example, a friction compensation torque may be added so as to compensate for a drop in assist torque stemming from the friction force produced in the steering mechanism 10. Also, a friction/viscosity compensation torque may be added so as to compensate for a drop in assist torque stemming from viscosity in addition to a drop in assist torque stemming from the friction. Notably, the characteristic of the compensation torque may be identical to that of a compensation torque Ta22 (FIG. 22 and FIG. 23) used in a second modification which will be described later.

The normal-time assist torque calculation section 71 performs the above-described calculation processing when the anomaly determination flag Ffail received from the anomaly detection section 72 is "0," and outputs the target assist torque Ta1 (i.e., calculation result) to the control changeover section 73.

The anomaly detection section 72 determines whether or not an anomaly has occurred in the steering torque sensor 21. The steering torque sensor 21 detects the torsion angle of the torsion bar provided in the middle of the steering shaft 12 so as to calculate the steering torque. The steering torque sensor 21 detects the torsion angle from the difference between the rotational angle of one end of the torsion bar and the rotational angle of the other end of the torsion bar. The steering torque sensor 21 includes rotational angle sensors (e.g., resolvers or MR sensors) for detecting the rotational angle, and outputs to the assist ECU 100 the detection signals of the rotational angle sensors in addition to the calculated torsion angle corresponding to the steering torque Tr. Notably, the embodiment may be modified such that only the detection signals of the rotational angle sensors are output to the assist ECU 100 and the assist ECU 100 calculates the steering torque.

Each of the rotational angle sensors provided in the steering torque sensor 21 outputs a voltage signal corresponding to the detected rotational angle. Accordingly, in the case where the voltage value of the output signal falls outside a proper range, it is considered that wire breakage or formation of a short circuit has occurred in the rotational angle sensor. When a rotational sensor (e.g., a resolver) whose output voltage changes sinusoidally and periodically is used, it is considered that wire breakage or formation of a short circuit has occurred therein even in the case where the output voltage is fixed to a constant value.

As described above, the anomaly detection section 72 detects an anomaly of the steering torque sensor 21 from the output voltage of each rotational angle sensor (it determines whether or not an anomaly has occurred). Subsequently, the anomaly detection section 72 sets the anomaly determination flag Ffail to "1" (abnormal) or "0" (normal) in accordance with the result of the anomaly determination of the steering torque sensor 21.

Next, the abnormal-time assist torque calculation section 80 will be described. The above-described normal-time assist torque calculation section 71 calculates the target assist torque Ta1 on the basis of the steering torque Tr; however, it cannot calculate the target assist torque Ta1 in the case where the steering torque sensor 21 suffers a failure. To solve this problem, in the case where an anomaly of the steering torque sensor 21 has been detected, the abnormal-time assist torque calculation section 80 calculates the target assist torque Ta2 on behalf of the normal-time assist torque calculation section 71.

The abnormal-time assist torque calculation section 80 receives a detection signal output from the lateral acceleration sensor 27 which detects the lateral acceleration of the vehicle (i.e., acceleration in the across-the-width direction of the vehicle), and computes the target assist torque Ta2 on the basis of the lateral acceleration LA detected by the lateral acceleration sensor 27. The absolute value of the lateral acceleration LA represents the magnitude of the lateral acceleration, and the sign (+ or -) thereof represents the direction of the lateral acceleration. For example, the lateral acceleration generated rightward assumes a positive value, and the lateral acceleration generated leftward assumes a negative value.

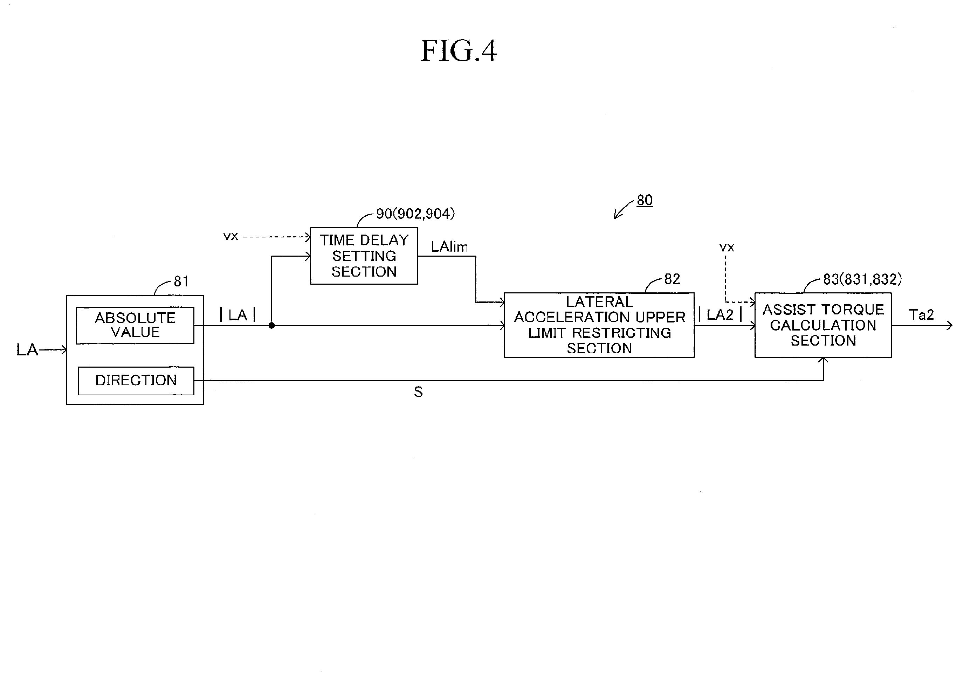

As shown in FIG. 4, the abnormal-time assist torque calculation section 80 includes a direction separating section 81, a time delay setting section 90, a lateral acceleration upper limit restricting section 82, and an assist torque calculation section 83. The direction separating section 81 separates the lateral acceleration LA output from the lateral acceleration sensor 27 into its absolute value |LA| and the information representing its direction S, outputs the absolute value |LA| to the time delay setting section 90 and the lateral acceleration upper limit restricting section 82, and outputs the direction S to the assist torque calculation section 83. Since the time delay setting section 90 and the lateral acceleration upper limit restricting section 82 do not require the direction of the lateral acceleration LA, the lateral acceleration |LA| will simply be referred to as the lateral acceleration LA in the following description of these sections in order to facilitate the description.

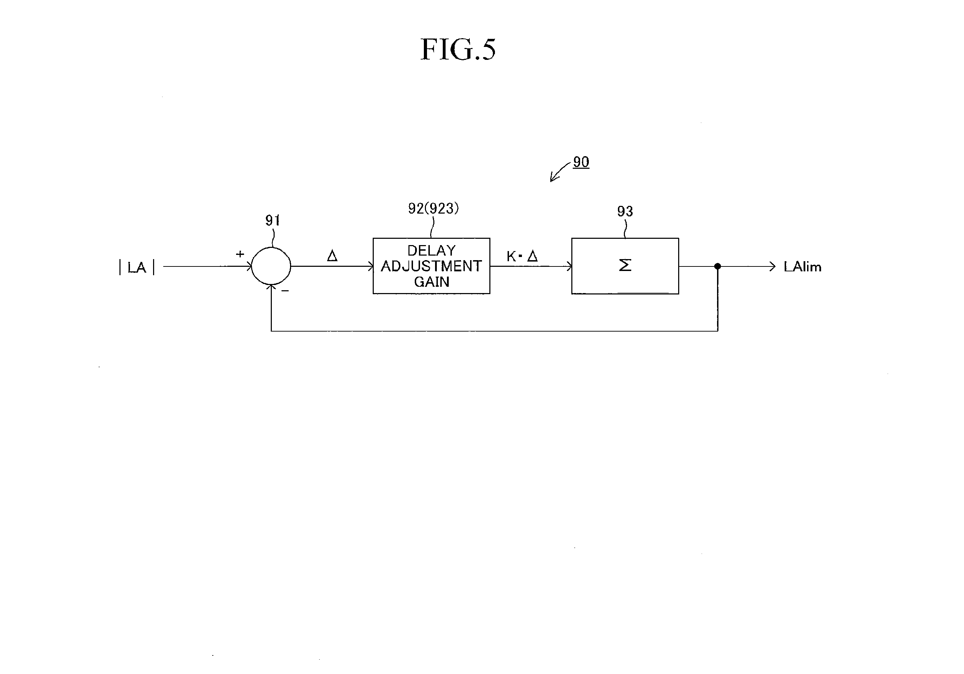

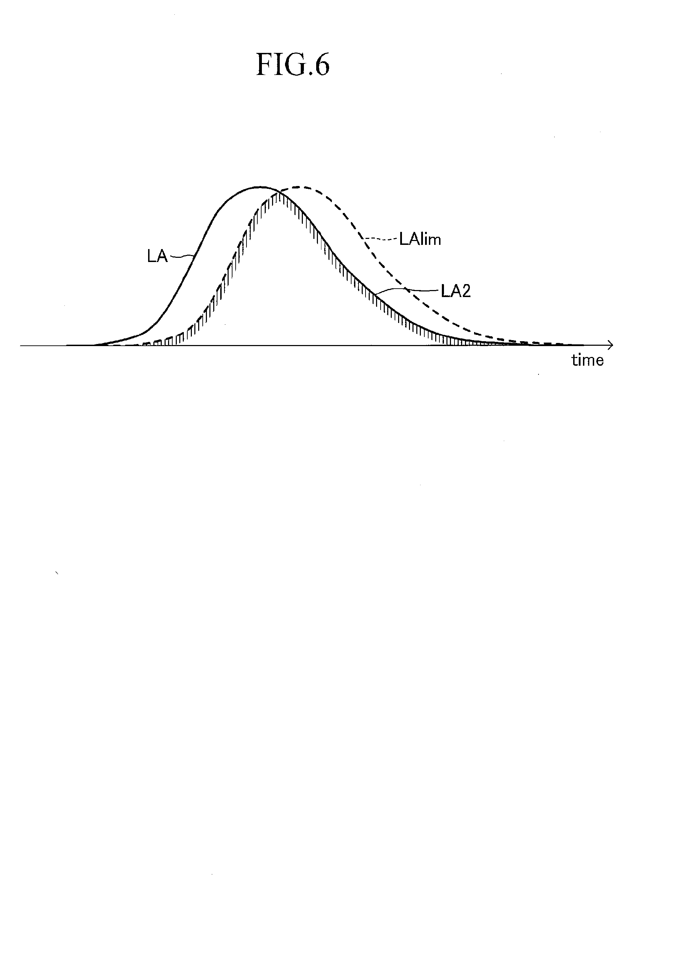

As shown in FIG. 5, the time delay setting section 90 includes a deviation calculation section 91, a delay adjustment gain multiplication section 92, and an integral calculation section 93. The time delay setting section 90 receives the lateral acceleration LA (= |LA|) and calculates a value LAlim which has a time delay in relation to the lateral acceleration LA as shown in FIG. 6. Hereinafter, the value LAlim will be referred to as the delayed lateral acceleration LAlim.

As shown in FIG. 5, the deviation calculation section 91 receives the lateral acceleration LA and the delayed lateral acceleration LAlim, which is the output of the time delay setting section 90, subtracts the delayed lateral acceleration LAlim from the lateral acceleration LA, and outputs the deviation $\Delta$ (= LA-LAlim)) (i.e., calculation result) to the delay adjustment gain multiplication section 92. The delay adjustment gain multiplication section 92, which stores a delay adjustment gain K, multiplies the deviation $\Delta$ by the delay adjustment gain K (> 0), and outputs the calculation result (K·$\Delta$) to the integral calculation section 93. Hereinafter, the calculation result output from the delay adjustment gain multiplication section 92 will be referred to as the gain multiplied value (K·$\Delta$).

The integral calculation section 93 integrates the gain multiplied value (K·$\Delta$) output from the delay adjustment gain multiplication section 92, and outputs the calculation result ($\Sigma$(K·$\Delta$)) as the delayed lateral acceleration LAlim. The deviation calculation section 91, the delay adjustment gain multiplication section 92, and the integral calculation section 93 perform calculation at predetermined short intervals, respectively. Thus, the deviation $\Delta$ (= LA-LAlim) is calculated at the predetermined intervals, the calculated deviation $\Delta$ is multiplied by the delay adjustment gain K, and the gain multiplied value (K·$\Delta$) is integrated by the integral calculation section 93. The initial value in the integral calculation section 93 is set to "0." Accordingly, a large deviation $\Delta$ is generated immediately after calculation has been started in the time delay setting section 90; however, the calculation processing is repeated such that the deviation $\Delta$ becomes close to zero. Thus, in the case where the time delay setting section 90 receives a lateral acceleration LA having a waveform shown in FIG. 6, the time delay setting section 90 calculates a delayed lateral acceleration LAlim which has a time delay in relation to the lateral acceleration LA.

In this case, the larger the gain K set in the delay adjustment gain multiplication section 92, the smaller the amount of the time delay of the delayed lateral acceleration LAlim in relation to the lateral acceleration LA. Accordingly, the amount of the time delay can be set as desired by adjusting the gain K. Since this time delay setting section 90 is composed of a first-order lag filter, the output waveform (delayed lateral acceleration LAlim) differs from the input waveform (lateral acceleration LA). However, the time delay setting section 90 may be composed of a delay circuit which merely delays the output value by a specified time.

The time delay setting section 90 outputs the delayed lateral acceleration LAlim (i.e., calculation result) to the lateral acceleration upper limit restricting section 82. The lateral acceleration upper limit restricting section 82 receives the lateral acceleration LA output from the direction separating section 81 and the delayed lateral acceleration LAlim output from the time delay setting section 90, and calculates a restricted lateral acceleration LA2 by restricting the upper limit of the lateral acceleration LA through use of the delayed lateral acceleration LAlim as the upper limit. That is, the lateral acceleration upper limit restricting section 82 compares the lateral acceleration LA with the delayed lateral acceleration LAlim, and outputs, as the restricted lateral acceleration LA2, the lateral acceleration LA or the delayed lateral acceleration LAlim whichever is smaller. Accordingly, the restricted lateral acceleration LA2 changes as indicated by the hatched waveform in FIG. 6.

In this case, the restricted lateral acceleration LA2 is zero at the start of generation of the lateral acceleration because the delayed lateral acceleration LAlim is always generated with a delay in relation to the lateral acceleration LA. The delayed lateral acceleration LAlim starts increasing with a delay in relation to the lateral acceleration LA, and it continues to increase for a while even after the lateral acceleration LA starts decreasing. When the delayed lateral acceleration LAlim exceeds the lateral acceleration LA, the output from the deviation calculation section 91 assumes a negative value and the delayed lateral acceleration LAlim starts decreasing.

Accordingly, as shown in FIG. 6, at the beginning of generation of the lateral acceleration, the restricted lateral acceleration LA2 assumes the same value as that of the delayed lateral acceleration LAlim, and changes with a delay in relation to the lateral acceleration LA. When the lateral acceleration LA starts decreasing and then becomes lower than the delayed lateral acceleration LAlim, the restricted lateral acceleration LA2 changes so as to assume the same value as that of the lateral acceleration LA.

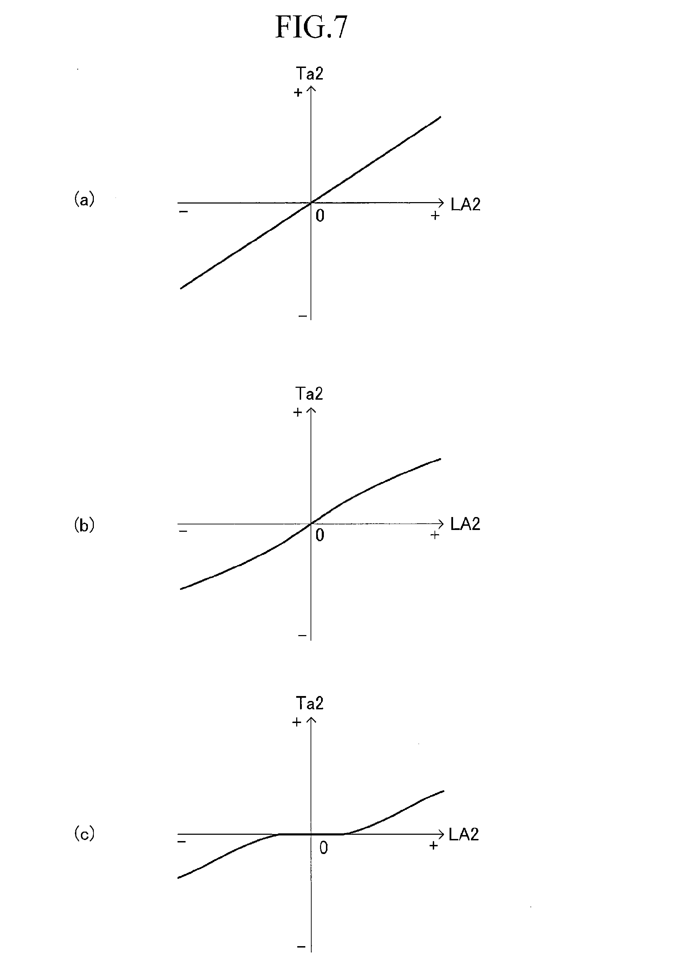

The lateral acceleration upper limit restricting section 82 outputs the restricted lateral acceleration LA2 (i.e., calculation result) to the assist torque calculation section 83. The assist torque calculation section 83 receives the restricted lateral acceleration LA2 and the direction S output from the direction separating section 81, and multiplies the restricted lateral acceleration LA2 (= |LA2|) by the direction S, to thereby obtain the restricted lateral acceleration LA2 containing directional information. Subsequently, the assist torque calculation section 83 calculates the target assist torque Ta2 with reference to the abnormal-time assist torque map shown in FIG. 7.

The abnormal-time assist map stored in the assist torque calculation section 83 is relational data which defines the relation between the restricted lateral acceleration LA2 and the target assist torque Ta2. The abnormal-time assist map has a characteristic that the target assist torque Ta2 increases as the magnitude (absolute value) of the restricted lateral acceleration LA2 increases. As the abnormal-time assist torque map, there may be employed, for example, a map in which the target assist torque Ta2 increases in proportion to the restricted lateral acceleration LA2 as shown in FIG. 7(a), a map in which the rate of increase in the target assist torque Ta2 decreases as the restricted lateral acceleration LA2 increases as shown in FIG. 7(b), or a map in which a dead zone is provided for the restricted lateral acceleration LA2 as shown in FIG. 7(c).

As mentioned above, the target assist torque Ta2 is set in accordance with the restricted lateral acceleration LA2. Accordingly, the target assist torque Ta2 is generated with a delay in relation to the lateral acceleration LA, and decreases therewith.

The assist torque calculation section 83 outputs the target assist torque Ta2 (i.e., calculation result) to the control changeover section 73.

According to the present electric power steering apparatus 1, even in the case where the steering torque sensor 21 suffers a failure, steering assist can be continued, because the abnormal-time assist torque calculation section 80 calculates the target assist torque Ta* on behalf of the normal-time assist torque calculation section 71. In this case, the abnormal-time assist torque calculation section 80 calculates the restricted lateral acceleration LA2 by restricting the upper limit of the lateral acceleration LA through use of the delayed lateral acceleration LAlim (which has a time delay in relation to the lateral acceleration LA) as the upper limit value, and sets the target assist torque Ta* (= Ta2) on the basis of the obtained restricted lateral acceleration LA2. Accordingly, since steering assist is not performed at the beginning of the steering operation, a larger force is required to turn the steering wheel 11, whereby fast steering wheel operation can be restrained. Therefore, it is possible to prevent the driver to turn the steering wheel 11 excessively.

Meanwhile, in the case where the driver turns the steering wheel 11 slowly, the driver does not turn the steering wheel 11 excessively. In this case, since the delay in steering assist is minor in relation to the steering operation performed at the slow speed, the driver hardly feel the delay in steering assist.

Meanwhile, for example, in the case where the driver turns the steering wheel 11 excessively, the lateral acceleration increases excessively, and accordingly the steering assist torque increases. Therefore, in this case, excessive turning of the steering wheel 11 is promoted, and consequently the vehicle may slip. In contrast, in the present embodiment, steering assist does not occur at the beginning of the steering operation. Therefore, fast turning of the steering wheel 11 is prevented, whereby excessive turning of the steering wheel 11 is prevented. Thus, the vehicle can be prevented from slipping.

Particularly when the vehicle is traveling on a road whose friction coefficient is low, the steering wheel 11 is liable to be turned excessively due to reduction in the gripping force of tires. However, in the present embodiment, since steering assist is started with a delay in relation to the steering operation, the above-described problem does not occur. Also, there may be a case where the vehicle behavior is disturbed momentarily as a result of a change in the friction coefficient of the road surface, and the lateral acceleration increases temporarily. In such a case, if steering assist is started immediately based on the lateral acceleration, the driver may turn the steering wheel 11 excessively. In the present embodiment, since start of steering assist is delayed as described above, excessive turning of the steering wheel 11 can be prevented even in the case where the vehicle behavior is disturbed momentarily.

Meanwhile, when the driver returns the steering wheel 11, since the lateral acceleration LA is smaller than the delayed lateral acceleration LAlim, the restricted lateral acceleration LA2 is set to the same value as that of the lateral acceleration LA. Therefore, the driver can smoothly perform the operation of returning the steering wheel 11.

<Second embodiment>

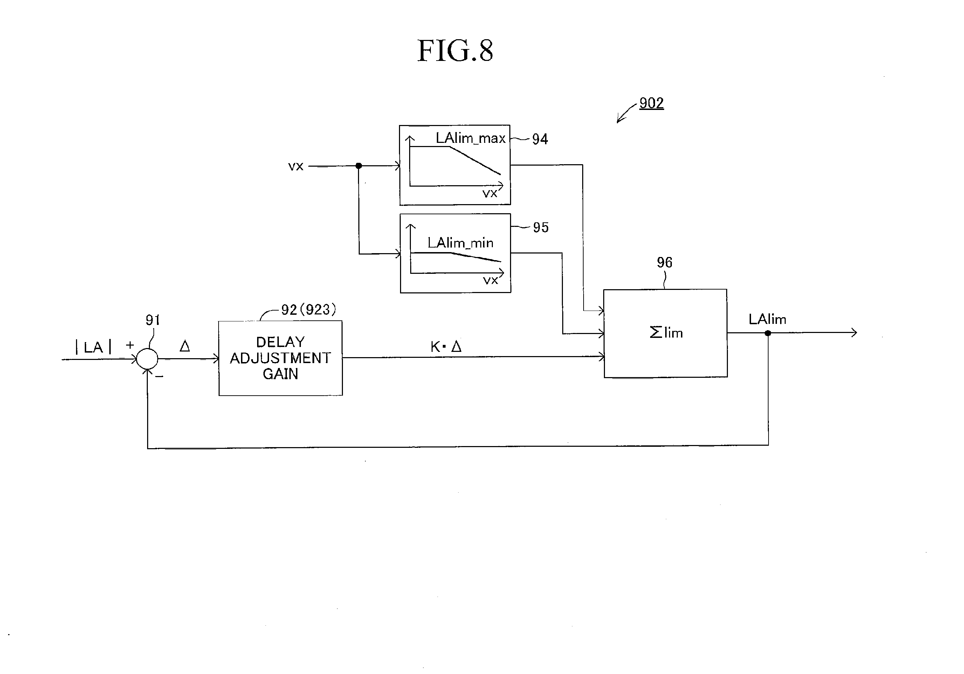

Next, a second embodiment will be described. An electric power steering apparatus 1 according to the second embodiment differs from the electrical power steering apparatus 1 according to the first embodiment only in the function of the time delay setting section 90; that is, the remaining sections of the electric power steering apparatus 1 according to the second embodiment are the same as those of the electric power steering apparatus 1 according to the first embodiment. Accordingly, only the time delay setting section will be described hereunder. FIG. 8 is a functional block diagram of a time delay setting section 902 according to the second embodiment. Functional blocks which are the same as those of the first embodiment are identified by the same reference numerals as those used to identify the corresponding functional blocks of the first embodiment, and descriptions of those functional blocks are omitted accordingly.

The time delay setting section 902 according to the second embodiment has a function of setting an upper limit and a lower limit for the delayed lateral acceleration LAlim. The time delay setting section 902 includes a deviation calculation section 91, a delay adjustment gain multiplication section 92, a delayed lateral acceleration upper limit setting section 94, a delayed lateral acceleration lower limit setting section 95, and a range-limiting integral calculation section 96. These functional blocks perform calculation at predetermined short intervals, respectively. The deviation calculation section 91 and the delay adjustment gain multiplication section 92 are the same as those of the first embodiment.

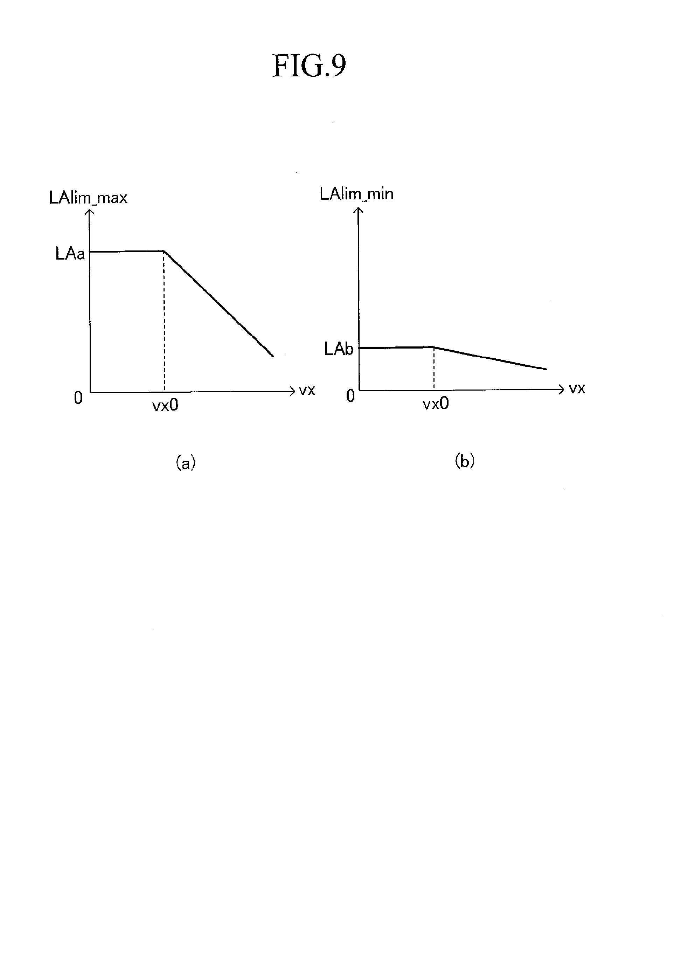

The delayed lateral acceleration upper limit setting section 94 receives a vehicle speed vx so as to calculate a delayed lateral acceleration upper limit LAlim_max, which is the upper limit of the delayed lateral acceleration LAlim, on the basis of the received vehicle speed vx. The delayed lateral acceleration upper limit setting section 94 stores a delayed lateral acceleration upper limit map shown in FIG. 9(a), and calculates, with reference to this map, the delayed lateral acceleration upper limit LAlim_max on the basis of the vehicle speed vx. The delayed lateral acceleration upper limit map has a characteristic that the delayed lateral acceleration upper limit LAlim_max is set to a constant value LAa in the case where the vehicle speed vx is equal to or less than a reference vehicle speed vx0, and that the delayed lateral acceleration upper limit LAlim_max decreases as the vehicle speed vx increases in the case where the vehicle speed vx is greater than the reference vehicle speed vx0. The delayed lateral acceleration upper limit setting section 94 outputs the calculated delayed lateral acceleration upper limit LAlim_max to the range-limiting integral calculation section 96.

The delayed lateral acceleration lower limit setting section 95 receives the vehicle speed vx so as to calculate a delayed lateral acceleration lower limit LAlim_min, which is the lower limit of the delayed lateral acceleration LAlim, on the basis of the received vehicle speed vx. The delayed lateral acceleration lower limit setting section 95 stores a delayed lateral acceleration lower limit map shown in FIG. 9(b), and calculates, with reference to this map, the delayed lateral acceleration lower limit LAlim_min on the basis of the vehicle speed vx. The delayed lateral acceleration lower limit map has a characteristic that the delayed lateral acceleration lower limit LAlim_min is set to a constant value LAb (< LAa) in the case where the vehicle speed vx is equal to or less than the reference vehicle speed vx0, and that the delayed lateral acceleration lower limit LAlim_min decreases as the vehicle speed vx increases in the case where the vehicle speed vx is greater than the reference vehicle speed vx0. The delayed lateral acceleration lower limit setting section 95 outputs the calculated delayed lateral acceleration lower limit LAlim_min to the range-limiting integral calculation section 96.

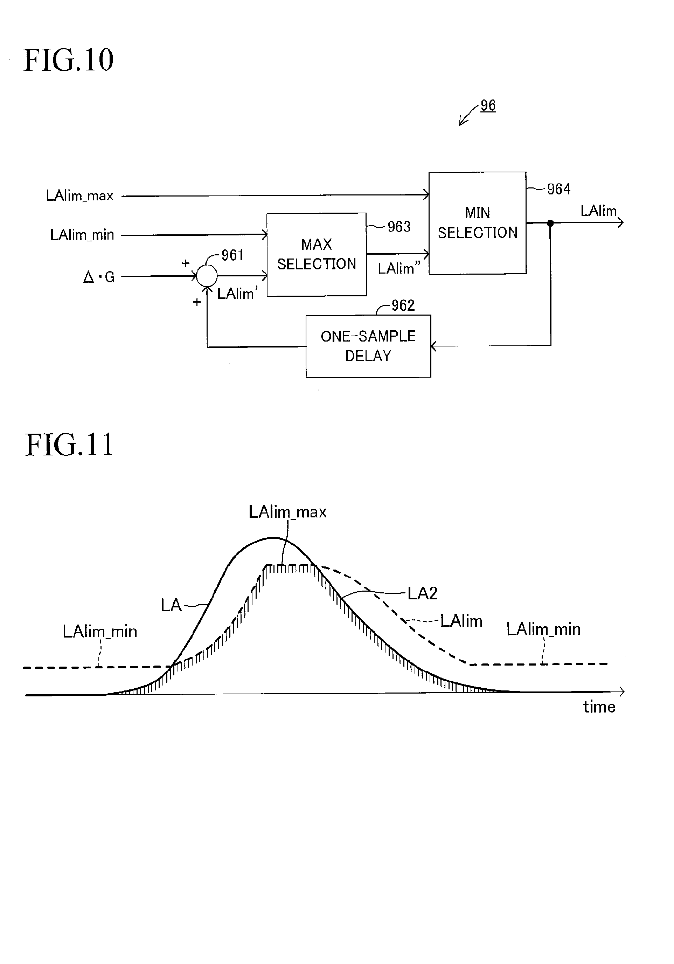

The range-limiting integral calculation section 96 is a calculation block which receives the gain multiplied value (K•Δ) output from the delay adjustment gain multiplication section 92, the delayed lateral acceleration upper limit LAlim_max, and the delayed lateral acceleration lower limit LAlim_min, calculates a delayed lateral acceleration LAlim, and outputs the delayed lateral acceleration LAlim (i.e., calculation result) to a lateral acceleration upper limit restricting section 82. As shown in FIG. 10, the range-limiting integral calculation section 96 includes an addition section 961, a one-sample delay section 962, a larger value selection section 963, and a smaller value selection section 964. These functional blocks perform calculation at predetermined short intervals, respectively.

The one-sample delay section 962 receives and stores the delayed lateral acceleration LAlim, which is the output (calculation result) of the range-limiting integral calculation section 96, and outputs this delayed lateral acceleration LAlim(n-1) to the addition section 961 in the next calculation cycle. Notably, "(n-1)" added at the end of the calculation result indicates that the calculation result has been obtained in the preceding calculation cycle. The addition section 961 adds the gain multiplied value (K•Δ) output from the delay adjustment gain multiplication section 92 to the delayed lateral acceleration LAlim(n-1) output from the one-sample delay section 962, and outputs the calculation result (LAlim(n-1)+K•Δ) to the larger value selection section 963.

Accordingly, the addition section 961 serves as an integrator which calculates a new delayed lateral acceleration LAlim' by integrating the gain multiplied value (K•Δ) such that the delayed lateral acceleration LAlim follows the lateral acceleration LA. Since this delayed lateral acceleration LAlim' is not subjected to an operation of restricting the upper and lower limits thereof which will be described later, hereinafter the delayed lateral acceleration LAlim' will be referred to as a pre-restriction delayed lateral acceleration LAlim'.

The larger value selection section 963 receives the delayed lateral acceleration lower limit LAlim_min output from the delayed lateral acceleration lower limit setting section 95 and the pre-restriction delayed lateral acceleration LAlim' output from the addition section 961, to thereby select the larger one between these two values. For example, if the pre-restriction delayed lateral acceleration LAlim' is greater than the delayed lateral acceleration lower limit LAlim_min, the larger value selection section 963 selects the pre-restriction delayed lateral acceleration LAlim'. If the pre-restriction delayed lateral acceleration LAlim' is equal to or less than the delayed lateral acceleration lower limit LAlim_min, the larger value selection section 963 selects the delayed lateral acceleration lower limit LAlim_min. The larger value selection section 963 outputs to the smaller value selection section 964 a lower limit restricted delayed lateral acceleration LAlim" which represents the selected value.

The smaller value selection section 964 receives the delayed lateral acceleration upper limit LAlim_max output from the delayed lateral acceleration upper limit setting section 94 and the lower limit restricted delayed lateral acceleration LAlim" output from the larger value selection section 963, and selects the smaller value between these two values. For example, if the lower limit restricted delayed lateral acceleration LAlim" is less than the delayed lateral acceleration upper limit LAlim_max, the smaller value selection section 964 selects the lower limit restricted delayed lateral acceleration LAlim". If the lower limit restricted delayed lateral acceleration LAlim" is equal to or greater than the delayed lateral acceleration upper limit LAlim_max, the smaller value selection section 964 selects the delayed lateral acceleration upper limit LAlim_max. The smaller value selection section 964 sets the selected value as the final delayed lateral acceleration LAlim.

Accordingly, as shown in FIG. 11, the delayed lateral acceleration LAlim output from the range-limiting integral calculation section 96 is one obtained by restricting the upper and lower limits of the delayed lateral acceleration LAlim of the first embodiment. This delayed lateral acceleration LAlim is output to the lateral acceleration upper limit restricting section 82. The lateral acceleration upper limit restricting section 82 calculates the restricted lateral acceleration LA2 by restricting the upper limit of the lateral acceleration LA through use of the delayed lateral acceleration LAlim as described in the first embodiment. Accordingly, the restricted lateral acceleration LA2 changes as indicated by the hatched waveform in FIG. 11.

Hereunder, there will be described the reason why the upper and lower limits of the delayed lateral acceleration LAlim are restricted. In the case where the upper limit of the lateral acceleration LA is restricted through use of the delayed lateral acceleration LAlim as in the case of the first embodiment, the delayed lateral acceleration LAlim is zero (the restricted lateral acceleration LA2 is also zero) immediately after generation of lateral acceleration. Accordingly, immediately after generation of lateral acceleration, steering assist is not performed and a larger force is required to turn the steering wheel 11, thereby preventing the vehicle from slipping. However, even when the vehicle is traveling on a road whose friction coefficient is low, the vehicle does not slip if the lateral acceleration is low (e.g., about 0.1 G to 0.2 G). Accordingly, so long as the lateral acceleration is low, no problem arises if start of steering assist is not delayed.

In contrast, in the case where a large lateral acceleration LA is detected, although start of steering assist is delayed, the steering assist may become excessively, because a large restricted lateral acceleration LA2 is eventually obtained through calculation.

To prevent this problem, in the second embodiment, in the situation where the lateral acceleration is low, the delayed lateral acceleration LAlim is prevented from becoming zero. To do so, in the second embodiment, the delayed lateral acceleration lower limit LAlim_min (> 0) is set as the lower limit of the delayed lateral acceleration LAlim. By means of setting the delayed lateral acceleration lower limit LAlim_min, as shown in FIG. 11, the lateral acceleration LA always becomes lower than the delayed lateral acceleration LAlim immediately after generation of lateral acceleration. Thus, steering assist can be started immediately after generation of lateral acceleration, thereby allowing the driver to perform steering operation smoothly. In the case where the lateral acceleration LA exceeds the delayed lateral acceleration LAlim, steering assist is restricted from that point in time. Thus, it becomes possible to prevent the driver to excessively turn the steering wheel 11.

Meanwhile, the delayed lateral acceleration lower limit LAlim_min is set in accordance with the gripping force limit of tires on a road (e.g., a snowy road) whose friction coefficient is low. Accordingly, even on a road whose friction coefficient is low, the vehicle can be prevented from slipping.

In addition, since the delayed lateral acceleration upper limit LAlim_max is set as the upper limit of the lateral acceleration LAlim, excessive steering assist can be prevented.

So long as the vehicle is a normal operation state, large lateral acceleration is rarely generated when the vehicle speed is high. In view of this, in the second embodiment, there are set the delayed lateral acceleration upper limit LAlim_max and the delayed lateral acceleration lower limit LAlim_min which decrease as the vehicle speed vx increases in the case where the vehicle speed vx is high. Thus, the vehicle can be effectively prevented from slipping during actual use.

<Modification of second embodiment>

In the second embodiment, the delayed lateral acceleration upper limit LAlim_max and the delayed lateral acceleration lower limit LAlim_min are set in accordance with the vehicle speed vx. However, at least one of the delayed lateral acceleration upper limit LAlim_max and the delayed lateral acceleration lower limit LAlim_min may be fixed to a certain value irrespective of the vehicle speed vx. In this case as well, it is possible to obtain proper steering assist at the beginning of steering while suppressing slippage of the vehicle.

Also, only one of the delayed lateral acceleration upper limit setting section 94 and the delayed lateral acceleration lower limit setting section 95 may be provided; namely, only the delayed lateral acceleration upper limit LAlim_max or the delayed lateral acceleration lower limit LAlim_min may be set. In this case as well, the delayed lateral acceleration upper limit LAlim_max or the delayed lateral acceleration lower limit LAlim_min may be fixed to a certain value irrespective of the vehicle speed vx.

<Third embodiment>

Next, a third embodiment will be described. An electric power steering apparatus 1 according to the third embodiment differs from the electrical power steering apparatus 1 according to the first or second embodiment only in the function of the delay adjustment gain multiplication section 92; that is, the remaining sections of the electric power steering apparatus 1 according to the third embodiment are the same as those of the electric power steering apparatus 1 according to the first or second embodiment. Accordingly, only the delay adjustment gain multiplication section will be described hereunder. The delay adjustment gain multiplication section in the third embodiment will be referred to as a delay adjustment gain multiplication section 923. The delay adjustment gain multiplication section 923 is configured to independently set the delay time of the delayed lateral acceleration LAlim for the case where the delayed lateral acceleration LAlim is increased and the case where the delayed lateral acceleration LAlim is decreased.

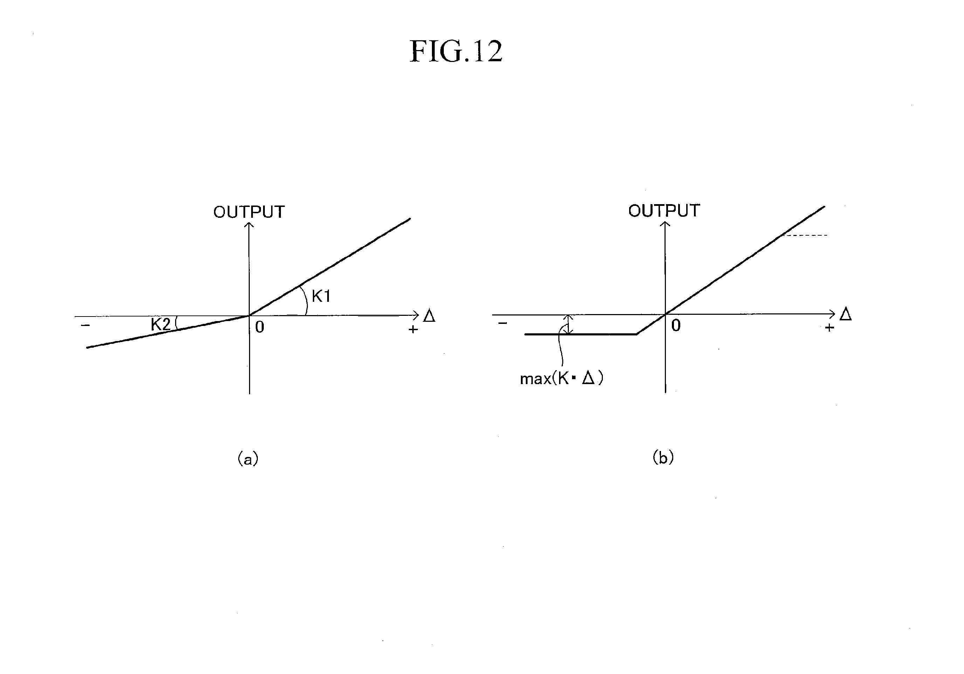

FIGS. 12(a) and 12(b) show two examples of the gain characteristic of the delay adjustment gain multiplication section 923. In these drawings, the horizontal axis represents the deviation $\Delta$ (= LA-LAlim) input to the delay adjustment gain multiplication section 923, and the vertical axis represents the gain multiplied value ($K \cdot \Delta$) which is the output of the delay adjustment gain multiplication section 923. In the gain characteristic of FIG. 12(a), a gradient K (= K2) which is used to decrease the delayed lateral acceleration LAlim is smaller than a gradient K (= K1) which is used to increase the delayed lateral acceleration LAlim. In the gain characteristic of FIG. 12(b), the maximum value max($K \cdot \Delta$) which is used to decrease the delayed lateral acceleration LAlim is restricted to a smaller value as compares with the case where the delayed lateral acceleration LAlim is increased.

Therefore, irrespective of which one of the gain characteristics is used, when the delayed lateral acceleration LAlim decreases, it changes over a longer period of time; namely, changes more slowly, compared with the case where the delayed lateral acceleration LAlim increases. Accordingly, in the case where the driver alternately and repeatedly turns the steering wheel 11 clockwise and counterclockwise (e.g., when traveling along a road having a series of curves), steering assist is started without delay for the second and subsequent steering operations. Therefore, the driver can cause the vehicle to travel along the series of curves through nimble steering wheel operation.

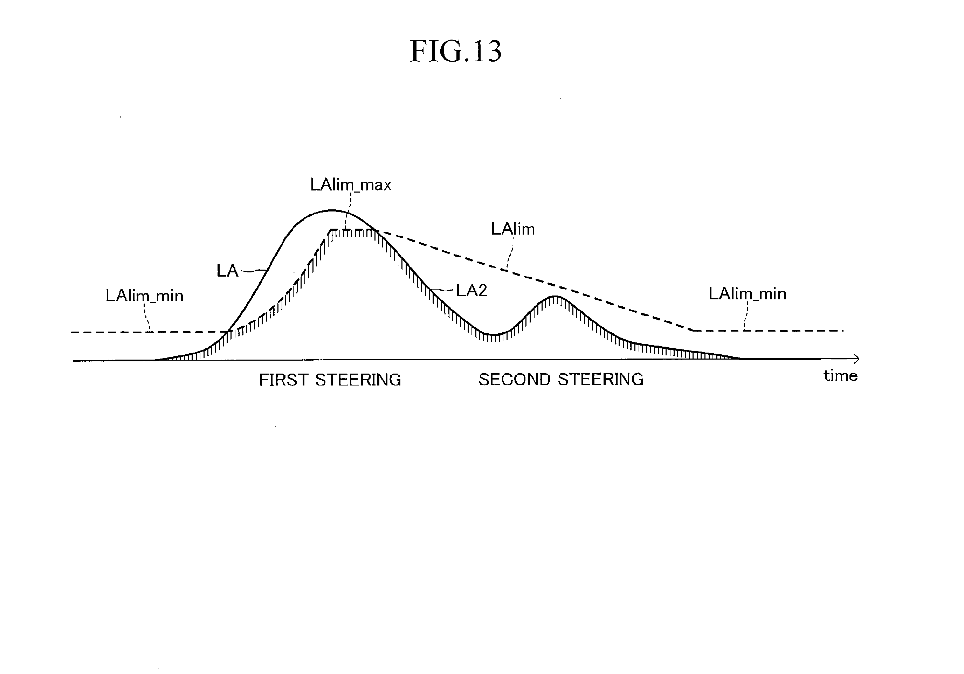

FIG. 13 shows the relation among the lateral acceleration LA, the delayed lateral acceleration LAlim, and the restricted lateral acceleration LA2 for the case where steering operation is performed two times within a short period of time. At the time of the first steering operation, since the restricted lateral acceleration LA2 whose upper limit is restrained by the delayed lateral acceleration LAlim is used, the start of steering assist is restrained. After the end of the first steering operation, the lateral acceleration LA decreases and the delayed lateral acceleration LAlim decreases after that. At that time, since the delayed lateral acceleration LAlim decreases slowly in accordance with the above-described gain characteristic, the delayed lateral acceleration LAlim is still decreasing and is greater than the lateral acceleration LA when the second steering operation is performed. Therefore, at the time of the second steering operation, the lateral acceleration LA is used as the restricted lateral acceleration LA2. Accordingly, steering assist is started without delay.

The coefficient of friction of the road surface is considered not to change greatly within a short period of time. In view of this, in the third embodiment, by adjusting the gain characteristic of the delay adjustment gain multiplication section 923, the speed at which the delayed lateral acceleration LAlim is decreased is rendered lower than the speed at which the delayed lateral acceleration LAlim is increased, whereby steering assist is started without delay for the second and subsequent steering operations in a series of steering operations. Therefore, according to the third embodiment, it is possible to simultaneously achieve prevention of excessive turning of the steering wheel 11 and improvement of steering assist performance.

<Modification of third embodiment>

As indicated by a dashed line in FIG. 12(b), the gain characteristic of the delay adjustment gain multiplication section 923 may be such that an upper limit is provided so as to prevent the gain multiplied value (K•Δ), which is the output of the delay adjustment gain multiplication section 923, from exceeding the upper limit when the deviation Δ (= LA-LAlim) is greater than a reference value. In this case, the delayed lateral acceleration LAlim can be prevented from increasing suddenly, and a proper delay time can be secured.

<Fourth embodiment>

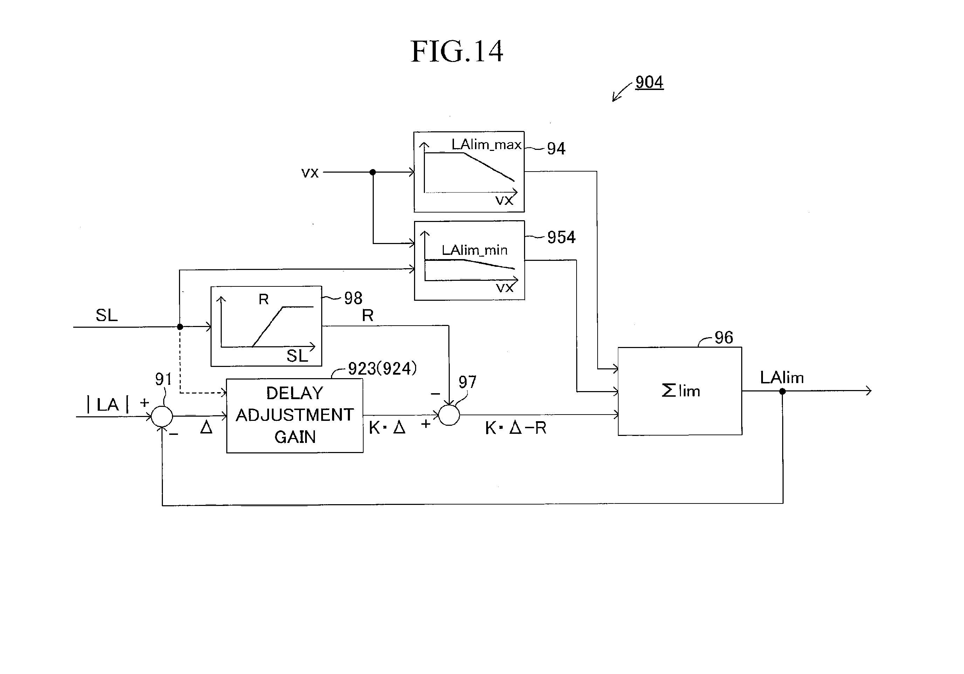

Next, a fourth embodiment will be described. An electric power steering apparatus 1 according to the fourth embodiment differs from the electrical power steering apparatus 1 according to any one of the first through third embodiments only in the function of the time delay setting section; that is, the remaining sections of the electric power steering apparatus 1 according to the fourth embodiment are the same as those of the electric power steering apparatus 1 according to any one of the first through third embodiments. Accordingly, only the time delay setting section will be described hereunder. FIG. 14 is a functional block diagram of a time delay setting section 904 according to the fourth embodiment. Functional blocks which are the same as those of the above-described embodiments are identified by the same reference numerals as those used to identify the corresponding functional blocks of the above-described embodiments, and descriptions of those functional blocks are omitted accordingly.

The time delay setting section 904 of the fourth modification obtains information which represents a slip index of the vehicle, and changes the delayed lateral acceleration LAlim such that the greater the slip index, the smaller the delayed lateral acceleration LAlim. The time delay setting section 904 includes a deviation calculation section 91, a delay adjustment gain multiplication section 923 (or a delay adjustment gain multiplication section 92), a reduction amount subtraction section 97, a delayed lateral acceleration upper limit setting section 94, a delayed lateral acceleration lower limit setting section 954, a slip-responsive reduction amount setting section 98, and a range-limiting integral calculation section 96. Each functional section executes computation processing at predetermined short intervals.

The slip-responsive reduction amount setting section 98 obtains a slip index SL which represents the degree of slippage of the vehicle. The slip index SL may be a slip index calculated by a vehicle behavior controller (not shown) which controls the behavior of the vehicle or may be calculated in the assist ECU 100. For example, the slip index SL can be calculated as follows.

The deviation ($|\theta-\theta'|$) between an estimative steering angle $\theta'$ obtained through, for example, calculation and an actual steering angle $\theta$ detected by a steering angle sensor (not shown) is calculated, and the slip index is set such that the greater the deviation, the greater the slip index. For example, the estimative steering angle $\theta'$ can be calculated by the following equation.

$$\theta' = KG \cdot \tan^{-1}(2b(V_1-V_2)/a(V_1+V_2))$$

In this equation, $V_1$ represents the rotation speed of the left rear wheel RW1, $V_2$ represents the rotation speed of the right rear wheel RW2, KG represents the gear ratio of a drive system between the motor 20 and the front wheels FW1 and FW2, a represents the tread between the left and right rear wheels RW1 and RW2, and b represents the wheelbase of the vehicle.

Alternatively, the deviation ($|\gamma-\gamma'|$) between a standard yaw rate $\gamma'$ obtained through, for example, calculation and an actual yaw rate $\gamma$ detected by a yaw rate sensor (not shown) is calculated, and the slip index is set such that the greater the deviation, the greater the slip index. For example, the standard yaw rate $\gamma'$ can be calculated by the following equation.

$$\gamma' = vx \cdot \theta/(N \cdot b) - Kh \cdot LA \cdot vx$$

In this equation, Kh represents the stability factor of the vehicle, and N represents the steering gear ratio.

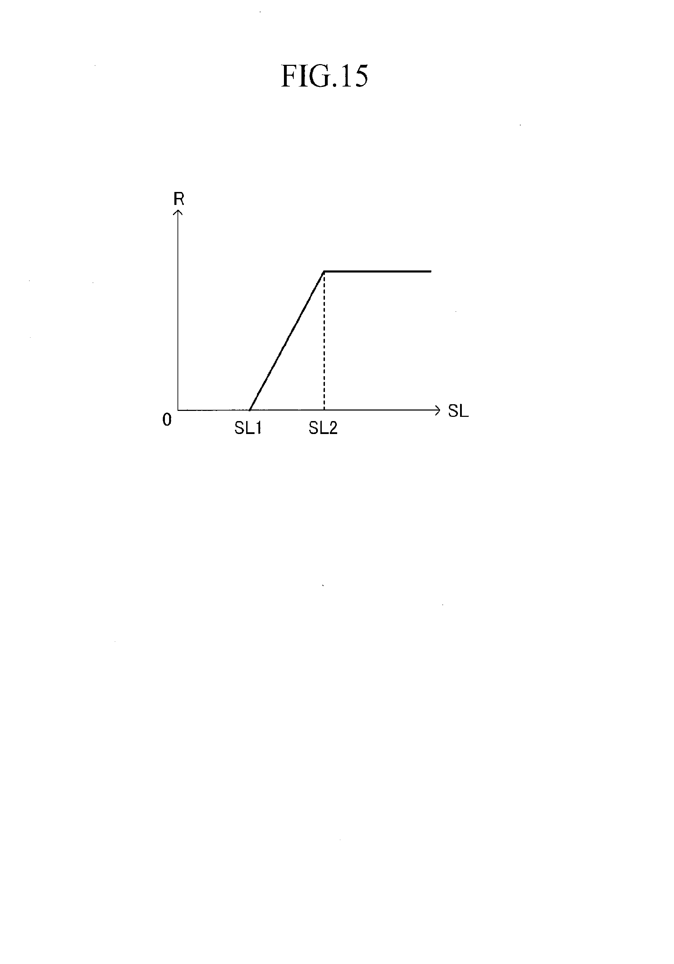

The slip-responsive reduction amount setting section 98 receives the slip index SL, and calculates, on the basis of the slip index SL, a reduction amount R used for reducing the gain multiplied value (K•Δ) output from the delay adjustment gain multiplication section 923. The slip-responsive reduction amount setting section stores a reduction amount map as shown in FIG. 15, and calculates the reduction amount R on the basis of the reduction amount map. The reduction amount map has a characteristic such that when the slip index SL is equal to or lower than a first reference value SL1, the reduction amount R is zero; when the slip index SL is greater than the first reference value SL1 but not greater than a second reference value SL2, the reduction amount R increases with the slip index SL; and when the slip index SL is greater than the second reference value SL2, the reduction amount R becomes constant.

Upon calculation of the reduction amount R on the basis of the slip index SL, the slip-responsive reduction amount setting section 98 outputs the reduction amount R to the reduction amount subtraction section 97. The reduction amount subtraction section 97 receives this reduction amount R and the gain multiplied value $(K \cdot \Delta)$ output from the delay adjustment gain multiplication section 923, subtracts the reduction amount R from the gain multiplied value $(K \cdot \Delta)$, and outputs the calculation result $((K \cdot \Delta)\text{-}R)$ to the range-limiting integral calculation section 96. Hereinafter, the calculation result $((K \cdot \Delta)\text{-}R)$ will be referred to as a slip-responsive gain multiplied value $((K \cdot \Delta)\text{-}R)$.

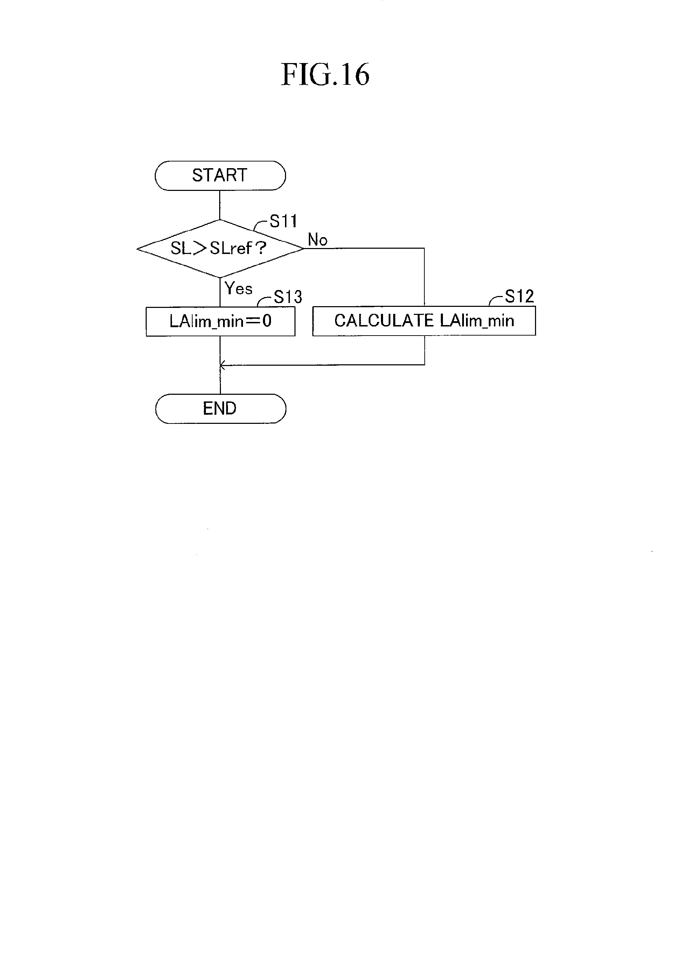

The slip index SL is also output to the delayed lateral acceleration lower limit setting section 954. The delayed lateral acceleration lower limit setting section 954 receives the vehicle speed vx and the slip index SL, and executes a delayed lateral acceleration lower limit setting routine shown in FIG. 16 at predetermined short intervals. In step S11, the delayed lateral acceleration lower limit setting section 954 determines whether or not the slip index SL is greater than a determination threshold SLref set in advance. In the case where the slip index SL is not greater than the determination threshold SLref, in step S12, a delayed lateral acceleration lower limit LAlim_min, which is the lower limit of the delayed lateral acceleration LAlim, is calculated on the basis of the vehicle speed vx. The calculation processing of this step S12 is the same as the calculation of the delayed lateral acceleration lower limit LAlim_min in the second embodiment. Notably, the determination threshold SLref may be freely set irrespective of the first and second reference values SL1 and SL2 used in the slip-responsive reduction amount setting section 98, or may be set to the same value as the first reference value SL1 or the second reference value SL2.

Meanwhile, in the case where the slip index SL is greater than the determination threshold SLref (S11: Yes), the delayed lateral acceleration lower limit setting section 954 sets the delayed lateral acceleration lower limit LAlim_min to zero (LAlim_min = 0) in step S13.

The delayed lateral acceleration lower limit setting section 954 outputs the delayed lateral acceleration lower limit LAlim_min calculated in step S12 or S13 to the range-limiting integral calculation section 96. Since the delayed lateral acceleration lower limit setting section 954 executes the delayed lateral acceleration lower limit setting routine at the predetermined short intervals, the delayed lateral acceleration lower limit setting section 954 outputs the delayed lateral acceleration lower limit LAlim_min corresponding to the magnitude of the slip index SL.

The range-limiting integral calculation section 96 receives the slip-responsive gain multiplied value $((K \cdot \Delta)\text{-}R)$ output from the reduction amount subtraction section 97, the delayed lateral acceleration upper limit LAlim_max output from the delayed lateral acceleration upper limit setting section 94, and the delayed lateral acceleration lower limit LAlim_min output from the delayed lateral acceleration lower limit setting section 954; and calculates the delayed lateral acceleration LAlim. The calculation of the delayed lateral acceleration LAlim is the same as that in the second embodiment. In this case, the slip-responsive gain multiplied value $((K \cdot \Delta)\text{-}R)$ is used in place of the gain multiplied value $(K \cdot \Delta)$ used in the second embodiment, and the delayed lateral acceleration lower limit LAlim_min calculated by the delayed lateral acceleration lower limit setting section 954 is used in place of the delayed lateral acceleration lower limit LAlim_min used in the second embodiment.

Accordingly, in the case where the vehicle is not slipping, a delayed lateral acceleration LAlim identical to that calculated in the second embodiment is calculated in the range-limiting integral calculation section 96. Meanwhile, in the case where the vehicle slips, the slip-responsive gain multiplied value $((K \cdot \Delta)\text{-}R)$, which is calculated through reduction of the reduction amount R set in accordance with the slip index SL, is integrated, whereby the delayed lateral acceleration LAlim is calculated. In this case as well, the upper and lower limits of the delayed lateral acceleration LAlim are restricted such that the delayed lateral acceleration LAlim falls between the delayed lateral acceleration upper limit LAlim_max and the delayed lateral acceleration lower limit LAlim_min.

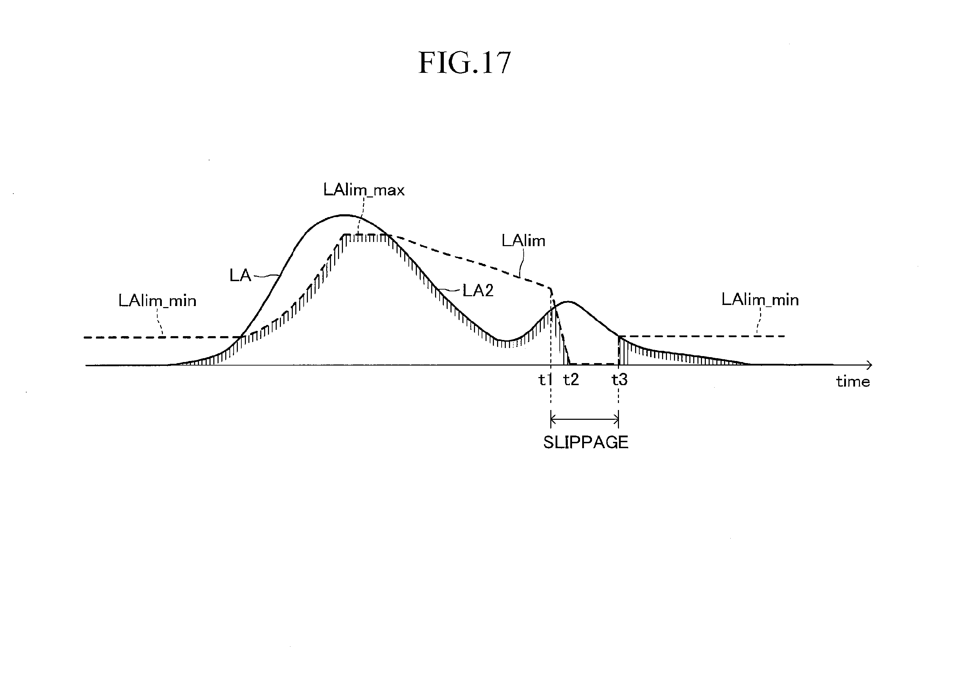

In this fourth embodiment, when the slip index SL of the vehicle exceeds the first reference value SL1, the gain multiplied value $(K \cdot \Delta)$ is reduced by the reduction amount R corresponding to the slip index SL. Therefore, the delayed lateral acceleration LAlim, which is the output of the range-limiting integral calculation section 96, decreases at a speed corresponding to the slip index SL. For example, when the slip index of the vehicle exceeds the first reference value at time t1 as shown in FIG. 17, the delayed lateral acceleration LAlim start to decrease greatly at that time. In this case, since the delayed lateral acceleration lower limit LAlim_min is set to zero, the delayed lateral acceleration LAlim quickly decreases to zero (time t2). Accordingly, the restricted lateral acceleration LA2 whose upper limit is restricted by the delayed lateral acceleration LAlim becomes zero, and consequently, steering assist is stopped. As a result, the force required to turn the steering wheel can be increased, whereby escalation of slippage of the vehicle (that is, further slippage of the vehicle) can be prevented.

When the slippage of the vehicle ends and the slip index SL decreases and becomes equal to or less than the determination threshold SLref (time t3), the delayed lateral acceleration lower limit LAlim_min (>0) is calculated on the basis of the delayed lateral acceleration lower limit map, whereby the restricted lateral acceleration LA2 is set such that it becomes equal to or less than the delayed lateral acceleration lower limit LAlim_min. Accordingly, steering assist can be resumed quickly. Thus, the period during which steering assist is stopped can be shortened to a minimum length required to prevent escalation of slippage of the vehicle. As a result, it is possible to simultaneously achieve prevention of escalation of slippage of the vehicle

and improvement of steering assist performance more satisfactorily.

Also, in the reduction amount map which defines the relation between the slip index SL and the reduction amount R, a dead band is set by using the first reference value SL1. Therefore, it is possible to prevent sensitive slip determination to thereby prevent occurrence of problems, such as a problem that steering assist is reduced unnecessarily because of an uneven road surface or the like. Also, for the delayed lateral acceleration lower limit LAlim_min, a dead band is set by using the determination threshold SLref (> 0). Therefore, it is possible to prevent the delayed lateral acceleration lower limit from being set to zero unnecessarily.

<Modification of fourth embodiment>

In the fourth embodiment, when the vehicle slips, the delayed lateral acceleration LAlim is quickly decreased by subtracting the reduction amount R from the gain multiplied value (K·Δ) output from the delay adjustment gain multiplication section 923. However, since the deviation Δ (= LA-LAlim) output from the deviation calculation section 91 increases, the gain multiplied value (K·Δ) may cancel out the reduction amount R. In such a case, the delayed lateral acceleration LAlim cannot be quickly decreased. The modification of the fourth embodiment is particularly effective for such a case.

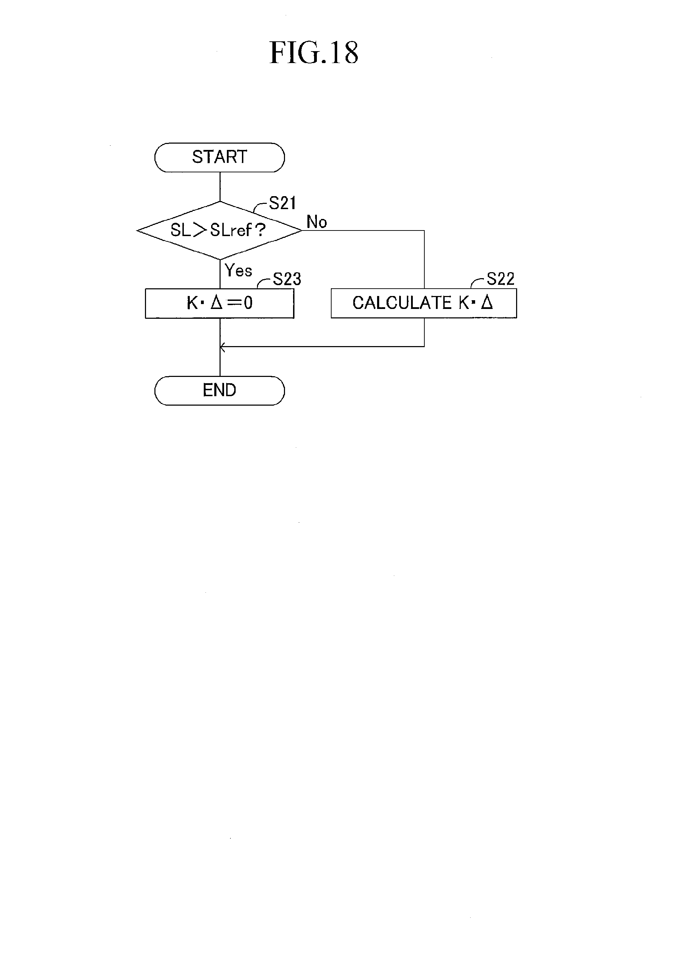

The modification of the fourth embodiment differs from the fourth embodiment only in the processing of the delay adjustment gain multiplication section. In the below, the delay adjustment gain multiplication section of the present modification will be referred to as a delay adjustment gain multiplication section 924, and the processing of the delay adjustment gain multiplication section 924 will be described. As indicated by a dashed line arrow in FIG. 14, the delay adjustment gain multiplication section 924 receives the slip index SL in addition to the deviation Δ output from the deviation calculation section 91, and executes a gain multiplying routine shown in FIG. 18 at predetermined short intervals.

In step S21, the delay adjustment gain multiplication section 924 determines whether or not the slip index SL is greater than a determination threshold SLref set in advance. This determination threshold SLref may be identical to or different from the determination threshold SLref used in step S11 by the delayed lateral acceleration lower limit setting section 954. In the case where the slip index SL is equal to or less than the determination threshold SLref, in step S22, the delay adjustment gain multiplication section 924 calculates the gain multiplied value by multiplying the deviation Δ by an adjustment gain K (≠ 0), and outputs the calculation result (K·Δ) to the reduction amount subtraction section 97.

Meanwhile, in the case where the slip index SL is greater than the determination threshold SLref, the delay adjustment gain multiplication section 924 sets the gain multiplied value to zero in step S23, and outputs the calculation result (K·Δ = 0) to the reduction amount subtraction section 97.

According to this modification, when slippage of the vehicle is detected, the delayed lateral acceleration LAlim can be decreased more quickly as compared with the fourth embodiment. Accordingly, the performance of preventing escalation of slippage of the vehicle can be enhanced.

Next, two modifications of the assist torque calculation section 83 common to the first through fourth embodiments will be described.

<First modification common to the first through fourth embodiments>

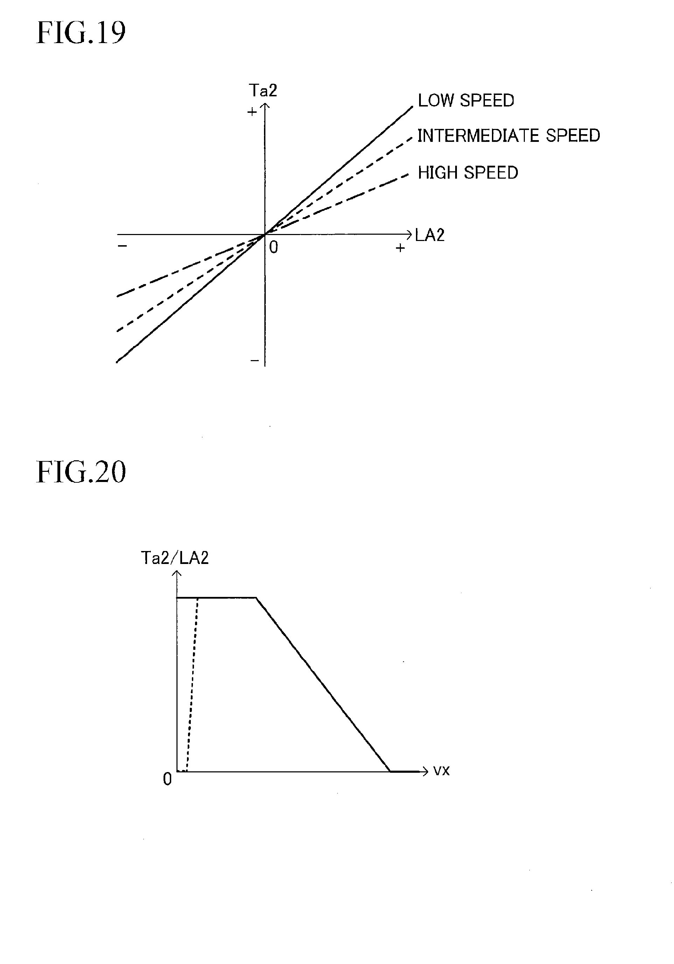

The assist torque calculation section according to the first modification will be referred to as an assist torque calculation section 831. As shown in FIG. 4, the assist torque calculation section 831 receives the vehicle speed vx in addition to the restricted lateral acceleration |LA2| and the direction S, and calculates the target assist torque Ta2 with reference to an abnormal-time assist map shown in FIG. 19. The abnormal-time assist map, which is stored in the assist torque calculation section 831, is relational data which defines the relation between the restricted lateral acceleration LA2 and the target assist torque Ta2 for each of representative vehicle speeds vx such that the target assist torque Ta2 increases with the magnitude (absolute value) of the restricted lateral acceleration LA2 and decreases as the vehicle speed vx increases.

Accordingly, the sensitivity of the target assist torque Ta2 to the restricted lateral acceleration LA2 is high when the vehicle speed vx is low, and the sensitivity of the target assist torque Ta2 to the restricted lateral acceleration LA2 decreases when the vehicle speed vx increases. As a result, it becomes possible to simultaneously achieve the reduction of steering force at the time of low speed traveling and the stability of steering operation at the time of high speed traveling.

The abnormal-time assist map used in this first modification corresponds to the map of FIG. 7(a). However, the abnormal-time assist map may be one corresponding to the map of FIG. 7(b) or the map of FIG. 7(c). Namely, the target assist torque Ta2 may be set such that the rate of increase in the target assist torque Ta2 decreases as the restricted lateral acceleration LA2 increases, or a dead band of the restricted lateral acceleration LA2 may be provided.

Also, as shown in FIG. 20, the abnormal-time assist map may be such that the ratio (Ta2/LA2) of the target assist torque Ta2 to the restricted lateral acceleration LA2 is set in accordance with the vehicle speed vx. In this case, as indicated by a dashed line in FIG. 20, the ratio (Ta2/LA2) may be set to zero when the vehicle speed vx is close to zero.

<Second modification common to first through fourth embodiments>

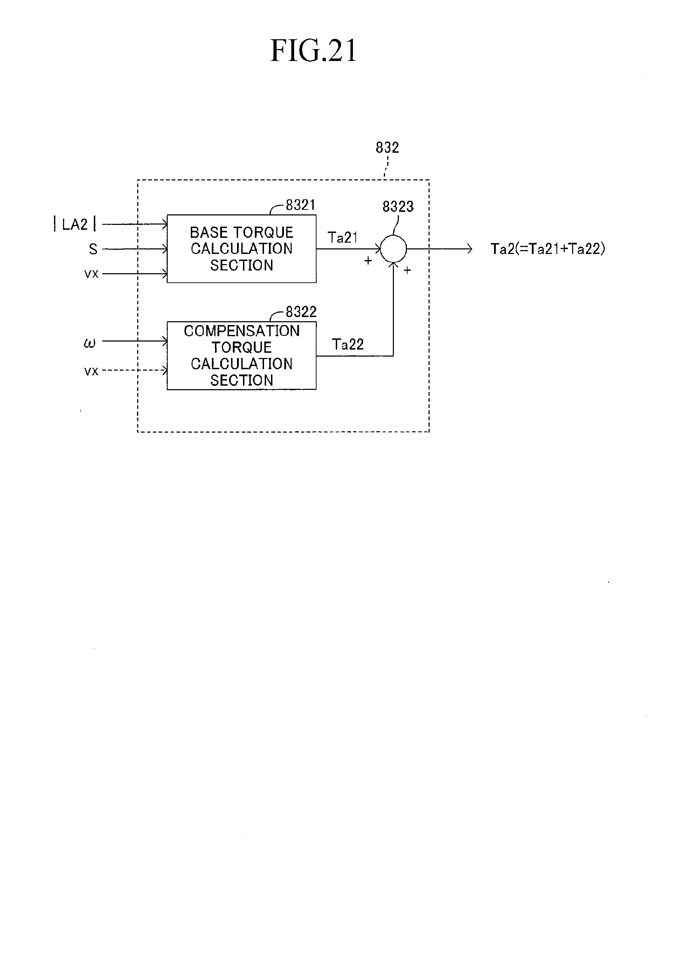

FIG. 21 shows the configuration of an assist torque calculation section 832 according to the second modification. The assist torque calculation section 832 includes a base torque calculation section 8321, a compensation torque calculation section 8322, and an addition section 8323. The base torque calculation section 8321 receives the restricted lateral acceleration |LA2|, the direction S, and the vehicle speed vx; and performs processing similar to that performed by the assist torque calculation section 831 of the above-described first modification. The base torque calculation section 8321 outputs the calculation result Ta21 (corresponding to the target assist torque Ta2 in the first modification) to the addition section 8323.

The compensation torque calculation section 8322 receives steering speed ω and calculates, with reference to a friction compensation map shown in FIG. 22, a compensation torque Ta22 used for compensating for a drop in assist torque stemming from the friction force produced in the steering mechanism 10. The friction compensation map, which is stored in the compensation torque calculation section 8322, sets the compensation torque Ta22, which is a constant torque acting in the steering direction. Notably, the steering speed ω is obtained by differentiating, with respect to time, the motor rotational angle θm detected by the motor rotational angle sensor 22. In the case where the vehicle has a steering angle sensor, the steering speed ω may be obtained by differentiating, with respect to time, the steering angle detected by the steering angle sensor.

The compensation torque calculation section 8322 outputs the calculated compensation torque Ta22 to the addition section 8323. The addition section 8323 receives the base torque Ta21 and the compensation torque Ta22 and adds them together so as to calculate the target assist torque Ta2 (= Ta21+Ta22).

The compensation torque calculation section 8322 may be configured to change the compensation torque Ta22 in accordance with the vehicle speed vx. For example, as indicated by a dashed line in FIG. 22, the compensation torque calculation section 8322 may set the compensation torque Ta22 such that the higher the vehicle speed vx, the smaller the compensation torque Ta22.

Also, the compensation torque calculation section 8322 may be configured to calculate a compensation torque Ta22 for compensating for a drop in assist torque stemming from the viscosity in the steering mechanism 10 in addition to a drop in assist torque stemming from the friction in the steering mechanism 10. In the case, preferably, the compensation torque Ta22 is calculated on the basis of the steering speed ω and with reference to a friction/viscosity compensation map as shown in FIG. 23. This friction/viscosity compensation map provides, as the compensation torque Ta22, the sum of a friction compensation torque which is constant and a viscosity compensation torque which increases with the steering speed ω. In this case as well, the compensation torque Ta22 is set such that the higher the vehicle speed vx, the smaller the compensation torque Ta22.

According to this second modification, even when the steering torque sensor 21 becomes anomalous, steering assist which is compensated for the frictional force and viscosity in the steering mechanism 10 can be performed. Also, it is possible to simultaneously achieve reduction of steering force at the time of low speed traveling and stability of steering operation at the time of high speed traveling.

Although the electric power steering apparatuses 1 according to the plurality of embodiments and modifications have been described, the present invention is not limited to the embodiments and modifications and may be modified in various ways without departing from the object of the present invention.

For example, in the embodiments, the lateral acceleration sensor 27 is provided, and the lateral acceleration LA detected by the lateral acceleration sensor 27 is input to the assist ECU 100. However, in place of the lateral acceleration detected by the lateral acceleration sensor 27, the lateral acceleration calculated from the steering angle and the vehicle speed may be input to the assist ECU 100. For example, the lateral acceleration LA can be calculated in accordance with the following equation.

$$LA = (V_1-V_2)(V_1+V_2)/2a$$

In the embodiments, a column-assist-type electric power steering apparatus in which torque generated by the motor 20 is applied to the steering shaft 12 is described. However, the electric power steering apparatus may be a rack-assist-type electric power steering apparatus in which torque generated by a motor is applied to the rack bar 14.

**Claims**

1. An electric power steering apparatus **characterized by** comprising:

   a motor which is provided in a steering mechanism and generates steering assist torque;
   lateral acceleration obtaining means for obtaining lateral acceleration of a vehicle;
   delayed lateral acceleration setting means for setting delayed lateral acceleration by delaying the lateral acceleration obtained by the lateral acceleration obtaining means;
   restricted lateral acceleration setting means for setting restricted lateral acceleration by restricting the lateral acceleration, which is obtained by the lateral acceleration obtaining means, by using as an upper limit the delayed lateral acceleration set by the delayed lateral acceleration setting means;
   assist control quantity setting means for setting a target steering assist control quantity on the basis of the restricted lateral acceleration set by the restricted lateral acceleration setting means; and
   motor control means for driving and controlling the motor in accordance with the target steering assist control quantity.

2. An electric power steering apparatus according to claim 1, further comprising delayed lateral acceleration restricting means for setting at least one of upper and lower limits of the delayed lateral acceleration.

3. An electric power steering apparatus according to claim 2, wherein the delayed lateral acceleration restricting means sets the at least one of the upper and lower limits of the delayed lateral acceleration to assume a smaller value when the speed of the vehicle is high as compared with the case where the speed of the vehicle is low.

4. An electric power steering apparatus according to any one of claims 1 to 3, further comprising time delay setting means for setting the time delay of the delayed lateral acceleration in relation to the lateral acceleration such that when the delayed lateral acceleration decreases, the time delay becomes greater as compared with the case where the delayed lateral acceleration increases.

5. An electric power steering apparatus according to any one of claims 1 to 4, further comprising:

   slip index obtaining means for obtaining a slip index which represents an index of sideslip of the vehicle; and

   delayed lateral acceleration reduction means for reducing the delayed lateral acceleration when the slip index exceeds a threshold value.

6. An electric power steering apparatus according to claim 5, further comprising:

   delayed lateral acceleration lower limit restricting means for setting a lower limit of the delayed lateral acceleration; and
   delayed lateral acceleration lower limit changing means for changing the lower limit of the delayed lateral acceleration to zero when the slip index exceeds a threshold value.

7. An electric power steering apparatus according to any one of claims 1 to 6, further comprising:

   steering torque sensor which detects steering torque transmitted from a steering wheel to a steering shaft; and
   anomaly detection means for detecting an anomaly of the steering torque sensor,
   wherein the assist control quantity setting means sets the target steering assist control quantity on the basis of the steering torque detected by the steering torque sensor in the case where the anomaly of the steering torque sensor is not detected and sets the target steering assist control quantity on the basis of the restricted lateral acceleration in the case where the anomaly of the steering torque sensor is detected.

FIG.1

# FIG.2

# FIG.3

# FIG.4

EP 2 792 576 A1

# FIG.5

EP 2 792 576 A1

# FIG.6

# FIG.7

(a)

(b)

(c)

# FIG.8

EP 2 792 576 A1

# FIG.9

(a)

(b)

# FIG.10

# FIG.11

# FIG.12

OUTPUT

K1

K2

0

$\Delta$

$-$   $+$

(a)

OUTPUT

$\Delta$

$-$   $+$

0

max(K・$\Delta$)

(b)

EP 2 792 576 A1

FIG.13

# FIG.14

# FIG.15

# FIG.16

```
              START

                │
                │   ┌─ S11
          ◇ SL＞SLref ?         No
              │                  │
            Yes  ┌─ S13          │              ┌─ S12
          ┌──────────────┐   ┌──────────────────────────┐
          │ LAlim_min＝0 │   │  CALCULATE LAlim_min     │
          └──────────────┘   └──────────────────────────┘
                │                  │
                │←─────────────────┘
                │
              END
```

# FIG.17

EP 2 792 576 A1

# FIG.18

```
            ┌──────────────┐
            │    START     │
            └──────┬───────┘
                   │         ┌─S21
              ╱────┴────╲
             ╱           ╲        No
            ⟨  SL>SLref?  ⟩──────────────┐
             ╲           ╱               │
              ╲────┬────╱                │
                 Yes  ┌─S23              │  ┌─S22
          ┌──────────┴──────┐    ┌───────┴──────────┐
          │   K·Δ=0         │    │  CALCULATE K·Δ   │
          └──────────┬──────┘    └───────┬──────────┘
                     │←───────────────────┘
            ┌────────┴─────┐
            │    END       │
            └──────────────┘
```

FIG.19

FIG.20

# FIG.21

832

8321

|LA2| →
S →
vx →

BASE TORQUE
CALCULATION
SECTION

Ta21

8323

+

+

Ta2(=Ta21+Ta22)

8322

ω →
vx ----→

COMPENSATION
TORQUE
CALCULATION
SECTION

Ta22

FIG.22

FIG.23

## INTERNATIONAL SEARCH REPORT

| International application No. |
|---|
| PCT/JP2011/078529 |

**A. CLASSIFICATION OF SUBJECT MATTER**
*B62D6/00*(2006.01)i, *B62D5/04*(2006.01)i, *B62D101/00*(2006.01)n, *B62D111/00*
(2006.01)n, *B62D119/00*(2006.01)n

According to International Patent Classification (IPC) or to both national classification and IPC

**B. FIELDS SEARCHED**

Minimum documentation searched (classification system followed by classification symbols)
B62D6/00, B62D5/04

Documentation searched other than minimum documentation to the extent that such documents are included in the fields searched
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-110975 A (JTEKT Corp.),<br>09 June 2011 (09.06.2011),<br>paragraphs [0023] to [0069]; fig. 1 to 5<br>(Family: none) | 1-7 |
| A | JP 2009-137442 A (Tokai Rika Co., Ltd.),<br>25 June 2009 (25.06.2009),<br>paragraphs [0016] to [0061]; fig. 1 to 8<br>(Family: none) | 1-7 |
| A | JP 2009-6985 A (NSK Ltd.),<br>15 January 2009 (15.01.2009),<br>paragraphs [0020] to [0084]; fig. 1 to 11<br>& US 2008/0294313 A1 & EP 1995150 A2 | 1-7 |

| ☒ Further documents are listed in the continuation of Box C. | ☐ See patent family annex. |

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 February, 2012 (21.02.12) | 06 March, 2012 (06.03.12) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2011/078529

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-117223 A  (Nissan Motor Co., Ltd.), 11 May 2006 (11.05.2006), paragraphs [0247] to [0252]; fig. 72, 73 & US 2006/0069481 A1    & EP 1640246 A2 | 1-7 |
| A | JP 2004-114755 A  (Koyo Seiko Co., Ltd.), 15 April 2004 (15.04.2004), paragraphs [0012] to [0032]; fig. 1 to 7 (Family: none) | 1-7 |
| A | JP 5-58315 A  (Nissan Motor Co., Ltd.), 09 March 1993 (09.03.1993), paragraphs [0020] to [0035]; fig. 1 to 14 & US 5337850 A | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006248250 A